(19) Europäisches Patentamt / European Patent Office / Office européen des brevets

(11) **EP 4 364 825 A1**

(12) **EUROPEAN PATENT APPLICATION**
published in accordance with Art. 153(4) EPC

(43) Date of publication:
**08.05.2024 Bulletin 2024/19**

(21) Application number: **22832642.7**

(22) Date of filing: **19.05.2022**

(51) International Patent Classification (IPC):
*B01D 61/00* (2006.01)    *B01D 63/02* (2006.01)
*B01D 69/00* (2006.01)    *B01D 69/02* (2006.01)
*B01D 69/08* (2006.01)    *B01D 69/10* (2006.01)
*B01D 69/12* (2006.01)    *B01D 71/56* (2006.01)
*B01D 71/68* (2006.01)    *B32B 5/18* (2006.01)

(52) Cooperative Patent Classification (CPC):
**B01D 61/00; B01D 63/02; B01D 69/00;**
**B01D 69/02; B01D 69/08; B01D 69/10;**
**B01D 69/12; B01D 71/56; B01D 71/68; B32B 5/18;**
Y02A 20/131

(86) International application number:
**PCT/JP2022/020834**

(87) International publication number:
**WO 2023/276483 (05.01.2023 Gazette 2023/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.06.2021 JP 2021106792**
            **28.06.2021 JP 2021106865**

(71) Applicant: **Asahi Kasei Kabushiki Kaisha**
**Tokyo 1000006 (JP)**

(72) Inventor: **HOTTA, Daisuke**
**Tokyo 100-0006 (JP)**

(74) Representative: **D Young & Co LLP**
**3 Noble Street**
**London EC2V 7BQ (GB)**

(54) **FORWARD OSMOSIS MEMBRANE AND FORWARD OSMOSIS MEMBRANE MODULE INCLUDING SAME**

(57) This forward osmosis membrane has a support membrane, and a separation functional layer on the support membrane. The support membrane has a porous support body. After water has been positioned on the separation functional layer side and a 3.5 mass% sodium chloride aqueous solution has been positioned on the porous support body side, with the forward osmosis membrane interposed therebetween, and a forward osmosis process has been performed with a transmembrane pressure difference P=100 kPa and with the porous support body side being forward, when a forward osmosis process is then performed with a transmembrane pressure difference P=20 kPa and with the porous support body side being forward, the ratio ($R_{100}/F_{100}$) of the permeated water quantity ($F_{100}$, unit: kg/(m$^2\times$hr)) and the salt reverse diffusion quantity ($R_{100}$, unit: g/(m$^2\times$hr)) satisfies the expression $0$ g/kg$\leq R_{100}/F_{100}\leq 0.12$ g/kg.

FIG. 1

EP 4 364 825 A1

**Description**

FIELD

The present invention relates to a forward osmosis membrane and a forward osmosis membrane module comprising the same.

BACKGROUND

Among selective separation technologies for liquid mixtures, membrane separation technologies are used in a wide range of fields such as seawater desalination, ultrapure water production, wastewater treatment, and the food industry. Microfiltration membranes, ultrafiltration membranes, nanofiltration membranes, and reverse osmosis membranes, are well known as membranes used in membrane separation technologies. However, in recent years, the forward osmosis method using a forward osmosis membrane has attracted attention.

Forward osmosis membranes have at least a separation functional layer and can achieve high concentrations that cannot be achieved with a reverse osmosis membrane.

In the forward osmosis method, when a feed solution and a draw solution having a higher osmotic pressure therethan are brought into contact with each other via a forward osmosis membrane, the solvent (e.g., water) moves from the feed solution (dilute solution) into the draw solution (concentrated solution) due to an osmotic pressure difference as a driving force generated between both sides of the separation functional layer.

In general, the separation functional layer is often a thin membrane. Thus, in order to physically support the separation functional layer, a support membrane such as a porous support or non-woven fabric is used, and the use of a composite semipermeable membrane constructed by combining this support membrane and the separation functional layer is used as a forward osmosis membrane.

The use of a composite semipermeable membrane, which is conventionally used in reverse osmosis, as a forward osmosis membrane has been considered. However, in the forward osmosis method, the osmotic pressure difference between the feed solution and the draw solution is used to move the solvent from the feed solution (dilute solution) side to the draw solution (rich solution) side. Conversely, in the reverse osmosis method, the solvent is moved from the concentrated solution side to the dilute solution side against the osmotic pressure difference by pressurizing the thick solution side.

As described above, since the forward osmosis method differs from the reverse osmosis method in terms of operating principle, even if a semipermeable membrane used in the reverse osmosis method is applied to the forward osmosis method as-is, the desired results may not necessarily be obtained.

The membrane used for forward osmosis is designed so as to allow a large amount of solvent to permeate from the feed solution to the draw solution (e.g., water permeability), and to minimize the diffusion of components in the draw solution to the feed solution (salt reverse diffusion). However, in general, high water permeability and low salt back-diffusion are contradictory, and it was not easy to achieve both.

Since the conventional forward osmosis treatment process mainly used water as the solvent, the forward osmosis membrane is designed so as to not swell or break when in contact with water.

However, in recent years, the target of separation or concentration by forward osmosis has expanded, and the process has diversified accordingly. Thus, forward osmosis membranes are required to withstand these process conditions. Thereamong, a forward osmosis membrane which has durability in processes containing an organic solvent is needed. Forward osmosis membranes, which are resistant to organic solvents, are expected to have a wide range of applications, as they can be used not only for the concentration and production of food products, but also for the separation and concentration of pharmaceutical products.

Thus, when carrying out forward osmosis treatment of a feed solution containing an organic solvent, the membrane used for this is required to have durability against the organic solvent.

Among such membranes, Patent Literature 1 and 2 each propose a forward osmosis membrane having excellent resistance to acids and organic solvents by using a forward osmosis membrane containing zeolite, which is an inorganic material. Patent Literature 3 proposes a technology in which a forward osmosis membrane having sufficient durability against organic compounds and excellent water permeability property is obtained by using a polyketone as a support membrane and laminating a separation functional layer thereon.

[CITATION LIST]

[PATENT LITERATURE

[PTL 1] Japanese Unexamined Patent Publication (Kokai) No. 2018-008270
[PTL 2] Japanese Patent No. 6191102
[PTL 3] WO 2016/024573

SUMMARY

[TECHNICAL PROBLEM]

However, though the forward osmosis membranes described in Patent Literature 1 and 2 have improved durability, their performance as forward osmosis membranes, including water permeability, are insufficient, and there are problems in practical use.
The technology of Patent Literature 3 has room for further improvement in terms of the forward osmosis membrane production method, cost, moldability, and physical durability.
An object of the present invention is to provide a forward osmosis membrane which has a certain degree of durability even when in contact with an organic solvent which causes the forward osmosis membrane to swell, which can exhibit high water permeability property and blocking properties, and which is easy to prepare, and to provide a forward osmosis membrane module using the same.

[SOLUTION TO PROBLEM]

Examples of embodiments of the present invention for achieving the above object are as follows.

<< Aspect 1>>

A forward osmosis membrane, comprising a support membrane and a separation functional layer on the support membrane, wherein

the support membrane comprises a porous support, and
when the forward osmosis membrane is interposed between water arranged on the separation functional layer side and a 3.5 mass% sodium chloride aqueous solution arranged on the porous support side, a forward osmosis treatment is carried out at a transmembrane pressure P = 100 (kPa), with the porous support side as the positive side, and a forward osmosis treatment is then carried out at a transmembrane pressure P = 20 kPa, with the porous support side as the positive side, a ratio ($R_{100}/F_{100}$) of a water permeability ($F_{100}$, unit: kg/(m$^2$×hr)) and a salt back diffusion amount ($R_{100}$, unit: g/(m$^2$×hr)) satisfies the following formula:

$$0 \text{ g/kg} \leq R_{100}/F_{100} \leq 0.12 \text{ g/kg}.$$

<< Aspect 2>>

The forward osmosis membrane according to Aspect 1, wherein the ratio ($R_{100}/F_{100}$) satisfies the following formula:

$$0 \text{ g/kg} \leq R_{100}/F_{100} \leq 0.091 \text{ g/kg}.$$

<<Aspect 3>>

The forward osmosis membrane according to Aspect 1, wherein when the forward osmosis membrane is interposed between water arranged on the separation functional layer side and a 3.5 mass% sodium chloride aqueous solution arranged on the porous support side, a forward osmosis treatment is carried out at a transmembrane pressure P = 150 (kPa), with the porous support side as the positive side, and a forward osmosis treatment is then carried out at a transmembrane pressure P = 20 kPa, with the porous support side as the positive side, a ratio ($R_{150}/F_{150}$) of a water permeability ($F_{150}$, unit: kg/(m$^2$×hr)) and a salt back diffusion amount ($R_{150}$, unit: g/(m$^2$×hr)) satisfies the following formula:

$$0 \text{ g/kg} \leq R_{150}/F_{150} \leq 0.15 \text{ g/kg}.$$

<< Aspect 4>>

The forward osmosis membrane according to Aspect 3, wherein the ratio ($R_{150}/F_{150}$) satisfies the following formula:

$$0 \text{ g/kg} \leq R_{150}/F_{150} \leq 0.10 \text{ g/kg.}$$

<<Aspect 5>>

The forward osmosis membrane according to Aspect 1, wherein when the forward osmosis membrane is interposed between water arranged on the separation functional layer side and a 3.5 mass% sodium chloride aqueous solution arranged on the porous support side, a forward osmosis treatment is carried out at a transmembrane pressure P = 200 (kPa), with the porous support side as the positive side, and a forward osmosis treatment is then carried out at a transmembrane pressure P = 20 kPa, with the porous support side as the positive side, a ratio ($R_{200}/F_{200}$) of a water permeability ($F_{200}$, unit: kg/(m$^2$×hr)) and a salt back diffusion amount ($R_{200}$, unit: g/(m$^2$×hr) satisfies the following formula:

$$0 \text{ g/kg} \leq R_{200}/F_{200} \leq 0.30 \text{ g/kg.}$$

<<Aspect 6>>

The forward osmosis membrane according to Aspect 5, wherein the ratio ($R_{200}/F_{200}$) satisfies the following formula:

$$0 \text{ g/kg} \leq R_{200}/F_{200} \leq 0.10 \text{ g/kg.}$$

<<Aspect 7>>

The forward osmosis membrane according to Aspect 1, wherein a thickness of the porous support is 50 $\mu$m or more and 1000 $\mu$m or less.

<<Aspect 8>>

The forward osmosis membrane according to Aspect 1, wherein the support membrane does not comprise a base material, and
the forward osmosis membrane is constituted substantially from only the porous support and the separation functional layer.

<<Aspect 9>>

The forward osmosis membrane according to Aspect 1, wherein the support membrane is hollow fiber-shaped.

<< Aspect 10>>

The forward osmosis membrane according to Aspect 9, wherein the separation functional layer is present on an inner surface of the hollow fiber-shaped support membrane.

<< Aspect 11>>

The forward osmosis membrane according to Aspect 1, wherein the porous support swells by 1.0 to 5.0% after being immersed in ethanol at 25 °C for 48 hours.

<< Aspect 12>>

The forward osmosis membrane according to Aspect 1, wherein the separation functional layer contains a polyamide.

<< Aspect 13>>

The forward osmosis membrane according to Aspect 1, wherein the separation functional layer has a concave/convex structure having an arithmetic mean height (Sa) of 40 nm or more.

<< Aspect 14>>

The forward osmosis membrane according to Aspect 1, wherein the porous support comprises one or more selected from the group consisting of polysulfones, polyethersulfones, and derivatives thereof.

<< Aspect 15>>

A forward osmosis membrane module, which is configured by housing the forward osmosis membrane according to Aspect 1 in a housing.

[ADVANTAGEOUS EFFECTS OF INVENTION]

According to the present invention, there is provided a forward osmosis membrane which has a certain degree of durability even when in contact with an organic solvent which causes the forward osmosis membrane to swell, which can exhibit high water permeability property and blocking properties, and which is easy to prepare, as well as a forward osmosis membrane module using the same.

The forward osmosis membrane and forward osmosis membrane module of the present invention can be suitably used, for example, for the separation and concentration of liquid food products and pharmaceutical solutions. By using the forward osmosis membrane of the present invention, the concentration target can be concentrated at a high magnification without heating. Thus, according to the forward osmosis membrane and forward osmosis membrane module of the invention, it is possible to carry out non-heating high-concentration concentration while suppressing the outflow of solutes from the feed solution and the inflow of solutes into the feed solution to a high degree while suppressing deterioration of the components and contamination with foreign matter.

The forward osmosis membrane and forward osmosis membrane module of the present invention can suitable be used in, in addition to the separation and concentration of liquid food products and pharmaceutical solutions, for example, seawater desalination, brackish water desalination, treatment of produced water discharged from gas or oil fields such as shale gas, concentration of fertilizer solutions, osmotic power generation, and dilution applications using the desired concentrate as draw solution.

BRIEF DESCRIPTION OF DRAWINGS

FIG. 1 is a cross-sectional schematic view of an aspect of a membrane module.
FIG. 2 is a graph in which the transmembrane pressure is plotted on the horizontal axis and the value of the ratio F/R obtained by forward osmosis evaluation is plotted on the vertical axis for the forward osmosis membranes obtained in Examples 1 to 3 and Comparative Examples 1 to 4.

DESCRIPTION OF EMBODIMENTS

<<Forward Osmosis Membrane>>

The forward osmosis membrane of the present invention comprises a support membrane and a separation functional layer on the support membrane, wherein

the support membrane comprises a porous support, and
when the forward osmosis membrane is interposed between water arranged on the separation functional layer side and a 3.5 mass% sodium chloride aqueous solution arranged on the porous support side, a forward osmosis treatment is carried out at a transmembrane pressure P = 100 (kPa), with the porous support side as the positive side, and a forward osmosis treatment is then carried out at a transmembrane pressure P = 20 kPa, with the porous support side as the positive side, a ratio ($R_{100}/F_{100}$) of a water permeability ($F_{100}$, unit: kg/(m$^2$×hr)) and a salt back diffusion amount ($R_{100}$, unit: g/(m$^2$×hr)) satisfies the following formula:

$$0 \text{ g/kg} \leq R_{100}/F_{100} \leq 0.12 \text{ g/kg}.$$

< < Support membrane > >

The support membrane of the forward osmosis membrane of the present invention comprises a porous support. The support membrane may or may not comprise a base material used for general reverse osmosis membranes.

[Base Material]

The base material generally holds the porous support, plays the role of imparting strength to the separation membrane, and is generally porous. Specific examples thereof include woven fabrics, non-woven fabrics, mesh-like nets, and foamed sintered sheets.

In the present embodiment, the support membrane of the forward osmosis membrane preferably does not comprise a base material. In the case in which the support membrane comprises a base material, when, for example, it comes into contact with an organic solvent and the porous support and the separation functional layer swell, the stress of the base material is released and the forward osmosis membrane itself deforms, and as a result, defects may occur in the separation functional layer. The interface between the base material and the porous support membrane may also peel and crack due to the difference in the degree of swelling between the two, and as a result, the performance of the forward osmosis membrane may deteriorate.

In order to overcome the above concerns, the support membrane of the forward osmosis membrane of the present embodiment does not comprise a base material.

Note that the base material and the porous support, which will be described later, are similar in that they are porous. However, the base material not included in the support membrane in the forward osmosis membrane of the present embodiment is generally a porous material having a larger pore size than the porous support and the separation functional layer. The average pore size of the base material is generally 0.1 to 100 $\mu$m. More specifically, it is evaluated in accordance with basis weight and air water permeability. The basis weight of the base material is 20 to 150 g/m$^2$, and the air water permeability of the base material as measured by the Frazier method is 0.5 to 30 cc/(cm$^2\times$sec).

In the case in which the support membrane does not comprise a base material, the support consists essentially of the porous support. In this case, the forward osmosis membrane is substantially composed only of the porous support and the separation functional layer.

The forward osmosis membrane "substantially consisting of only the porous support and the separation functional layer" is not limited to the case where the components of the forward osmosis membrane are strictly only the porous support and the separation functional layer, and in addition to thereto, this means that optional components such as a dispersing agent, a hydrophilizing agent, a coating agent, a moisturizing agent, and a preservation solution for the separation membrane may be included. These optional components may be inorganic compounds or organic compounds.

When the support membrane comprises a base material, the support consists substantially only of the base material and the porous support. In this case, the forward osmosis membrane consists essentially only of the base material, the porous support, and the separation functional layer.

In the case where the support membrane comprises a base material, the support and the forward osmosis membrane can each contain, in addition to the elements shown above, optional components such as a dispersant, a hydrophilizing agent, a coating agent, a moisturizing agent, and a preservation solution for the separation membrane. These optional components may be inorganic compounds or organic compounds.

[Porous Support]

The porous support plays a role in imparting strength to the separation functional layer. The porous support may have separation performance for solvent-insoluble particles, but preferably does has substantially no separation performance for ions dissolved in the solvent.

The composition of the porous support is not particularly limited. However, the porous support is preferably composed of a resin, and more preferably composed of a thermoplastic resin. Thermoplastic resins are materials which are composed of a chain polymer and exhibit the property of being deformed or fluidized by an external force when heated.

Examples of thermoplastic resins include polysulfone, polyethersulfone, polyketone, polyamide, polyester, cellulosic polymer, vinyl polymer, polyphenylene sulfide, polyphenylene sulfide sulfone, polyphenylene sulfone, polyphenylene oxide, and homopolymers or copolymers thereof can be used alone or in combination of two or more thereof. Derivatives having any functional group on the main chain, side chain, or terminal of these polymers can also be used as the thermoplastic resin in the present embodiment.

Specific examples of thermoplastic resins include the following resins.

Examples thereof include cellulose-based polymers such as cellulose acetate and cellulose nitrate; and vinyl polymers such as polyethylene, polypropylene, polyvinyl chloride, chlorinated polyvinyl chloride, and polyacrylonitrile.

Among those exemplified above, in particular, it is preferable that one or more selected from polysulfone, polyacrylonitrile, polyamide, polyester, polyvinyl alcohol, polyphenylene sulfide sulfone, polyphenylene sulfone, polyphenylene sulfide, polyether sulfone, polyvinylidene fluoride, cellulose acetate, polyvinyl chloride, and chlorinated polyvinyl chloride be used.

More preferable examples include cellulose acetate, polysulfone, polyethersulfone, polyketone, and polyacrylonitrile. Among these materials, it is preferable that polysulfone or polyethersulfone, and more preferably polysulfone, be used because they are chemically, mechanically, and thermally stable, are widely available, are readily available, and are easy to mold.

Polysulfone and polyethersulfone and derivatives thereof are often soluble in aprotic polar organic solvents such as N-methyl-2-pyrrolidone, dimethylacetamide, dimethylformamide. Aprotic polar organic solvents are readily available and easy to handle.

Polysulfone and polyethersulfone and derivatives thereof often swell in hydrophilic organic solvents such as alcohols. Due to this property, the performance of a forward osmosis membrane comprising a porous support composed of the above materials can be changed by contact with an alcohol. In general, when a membrane swells, the separation performance thereof is often significantly impaired. However, the forward osmosis membrane of the present embodiment is designed to exhibit physical durability even when in contact with an alcohol, and has durability against organic solvents. Thus, the performance of the forward osmosis membrane of the present embodiment can be changed by contact with an alcohol while maintaining constant separation performance.

The performance of the forward osmosis membrane that changes upon contact with an alcohol includes, for example, a water permeability property (flux) and salt back diffusion amount (RSF).

In the present embodiment, "swelling" means that the shape of the forward osmosis membrane or support membrane changes when it is brought into contact with a liquid or immersed in a liquid for a certain period of time. This shape change often occurs on a visible scale.

The porous support of the present embodiment preferably changes in length by 1.0% or more after being immersed in ethanol at 25 °C for 48 hours. The change in length due to this swelling is preferably 8.0% or less so as not to significantly reduce the separation performance of the forward osmosis membrane. The change in length due to swelling is more preferably 5.0% or less, and further preferably 3.5% or less.

The degree of change due to swelling may vary depending on the type of material resin, the pore distribution of the porous support, and the number of pores of the porous support.

The porous support may be composed of a material containing a thermoplastic resin selected from the above as a main component. "Containing as a main component" means that it contains more than 50% by mass, 60% by mass or more, 70% by mass or more, and 80% by mass or more, 90% by mass or more, or 95% by mass or more of specific one or more thermoplastic resins relative to the total mass of the porous support.

The porous support may be composed solely of a thermoplastic resin selected from those listed above.

The thickness of the porous support is preferably 10 to 1,000 µm from the viewpoint of strength.

[Support membrane]

As described above, the support membrane of the present embodiment is preferably composed essentially of the porous support.

When the support membrane consists of only the porous support, the thickness of the porous support (i.e., the thickness of the support membrane) is preferably 20 to 1,000 µm from the viewpoint of strength.

When the porous support is composed of a material that deforms due to swelling when in contact with an organic solvent, the thickness is preferably 50 to 1,000 µm, and from the viewpoint of balancing solvent permeation resistance and strength, it is preferably 50 to 500 µm or 100 to 500 µm, and particularly preferably 100 to 350 µm.

The shape of the support membrane is preferably membrane-like (flat membrane-like), tube-like, hollow fiber-like, and chemically or physically deformed forms thereof. "Hollow fiber-like" as used herein means the shape of a hollow tube having an outer diameter of approximately 5 mm or less, and "tube-like" means a shape of a hollow tube having an outer diameter of greater than approximately 5 mm.

The shape of the support membrane is more preferably a hollow fiber shape, since a larger membrane area can be accommodated in a smaller space when modularized.

[Inner Diameter and Outer Diameter of Hollow Fiber Support membrane]

When the support membrane is a hollow-fiber support membrane, the inner diameter and outer diameter of the hollow-fiber support membrane are not particularly limited. However, in consideration of membrane forming stability, ease of handling, and membrane area when formed into a module, it is preferable that the outer diameter be 100 $\mu$m to 3,000 $\mu$m and the inner diameter be 30 to 2,500 $\mu$m, and it is more preferable that the outer diameter be 200 $\mu$m to 1,500 $\mu$m and the inner diameter be 50 to 1,000 $\mu$m, and in consideration of both the viewpoints that the feed solution containing the poorly soluble substance can be passed through the hollow portion without hindrance and strength, it is preferable that the outer diameter be 500 to 1,300 $\mu$m and the inner diameter be 200 to 1,000 $\mu$m.

The thickness of the hollow fiber support membrane refers to the value obtained by dividing the difference between the outer diameter and the inner diameter of the cross section obtained by cutting the hollow fiber support membrane in a plane perpendicular to the membrane surface direction (longitudinal direction) by two. The inner diameter, outer diameter, and membrane thickness can each be measured by observing the cross-section of the hollow fiber support membrane using an optical microscope or a scanning electron microscope. The support membrane obtained by decomposing the separation functional layer of the forward osmosis membrane may be observed. The membrane thickness of the hollow fiber support membrane is preferably 50 to 1,000 $\mu$m, and more preferably 50 to 500 $\mu$m, from the viewpoint of balancing solvent permeation resistance and strength. From the viewpoint of diffusibility of the solution in the membrane thickness portion (membrane wall portion) during forward osmosis treatment, the thickness is preferably 100 to 250 $\mu$m.

[Separation Functional Layer]

The separation functional layer substantially carries out a solute separation function in the forward osmosis membrane. More specifically, the separation functional layer has the function of separating the solvent in the liquid mixture and the solute such as ions dissolved in this solvent. The composition and thickness of the separation functional layer are set in accordance with the intended use of the forward osmosis membrane.

The separation functional layer is arranged on the surface of the support membrane. When the support membrane has the concept of a front and a back, it is preferably arranged on either the front or the back. However, the separation functional layer may be arranged on both sides of the support membrane or inside the pores of the support membrane.

The separation functional layer may be present only on one side of the support membrane or may be present on both sides of the support membrane. When the separation functional layers are present on both sides of the support membrane, the thickness, separation performance, and salt blocking performance may be the same or different on both sides. Moreover, the separation functional layers on both sides of the support membrane may be continuous via the support membrane, or may be discontinuous.

When the support membrane is hollow fiber-like, the separation functional layer may be present on the inner surface, the outer surface, or both surfaces of the hollow-fiber-like support membrane, and preferably on the inner surface.

When the separation functional layer is arranged on both sides of the support membrane, the "separation functional layer side" as used herein means the side of the layer that blocks the solute with a higher blocking rate in the entire forward osmosis membrane. The following is an example of a method for understanding which side blocks the solute with a higher blocking rate.

The amount of salt back diffusion into the feed solution can be evaluated by arranging purified water as the feed solution on one side and the draw solution on the other side via the forward osmosis membrane and then reversing the arrangement of these solutions. When these two evaluation results are compared, the feed solution side of the arrangement where the amount of salt back diffusion is smaller can be defined as the side that blocks the solute of the draw solution more efficiently (separation functional layer side).

As the draw solution, a 3.5% by mass sodium chloride aqueous solution or a 50% by mass isopropanol aqueous solution can be used, and it is preferable that a 3.5% by mass sodium chloride aqueous solution be used.

Examples of the material of the separation functional layer include one or more selected from high molecular weight polymers, inorganic substances, and organic-inorganic hybrid compounds, and compositions comprising a predetermined inorganic or organic compound dispersed or dissolved therein.

A separation functional layer composed of a high molecular weight polymer is preferentially permeable to solvents, blocking solutes, and has substantial separation performance. As the high molecular polymer constituting such a separation functional layer, polyamide, polyvinyl alcohol, sulfonated polyethersulfone, polypiperazinamide, and polyimide, and composite materials composed of two or more of these can suitably be used.

[Polyamide Separation Functional Layer]

In the present embodiment, a polyamide separation functional layer containing polyamide as a main component is preferably used from the viewpoint of easy formation of a defect-free thin membrane on the porous support. "Mainly composed of polyamide" as used herein means a separation functional layer in which the mass ratio of polyamide to the total mass of the separation functional layer is 50% by mass or more, 75% by mass or more, or 95% by mass or more. The mass ratio of the polyamide to the total mass of the separation functional layer may be 100% by mass.

The polyamide separation functional layer is preferably a polycondensation product of a polyfunctional amine and a polyfunctional acid halide. The formation of the polyamide separation functional layer includes interfacial polycondensation on the surface of the porous support using an aqueous solution containing a polyfunctional amine and a solution containing a polyfunctional acid halide to form a polyamide skeleton. The organic solvent in the organic solvent solution containing the polyfunctional acid halide is preferably a water-immiscible organic solvent.

The method for forming the polyamide separation functional layer will be described in detail later.

[Thickness of Separation Functional Layer]

The thickness of the separation functional layer is preferably as thin as possible as long as there are no pinholes. However, it is desirable to have a suitable thickness in order to maintain mechanical strength and chemical resistance. Considering membrane formation stability, and water permeation resistance, for example, the thickness of the separation functional layer (high molecular weight polymer thin membrane) made of a high molecular weight polymer is preferably 0.01 to 3 $\mu$m as an average value, and more preferably 0.1 to 1 $\mu$m.

The average thickness of the separation functional layer is determined by microscopy. Specifically, for example, the separation membrane is embedded in a resin and then cut to produce an ultra-thin section. The obtained slice is subjected to treatment such as staining, and then observed with a transmission electron microscope (TEM) or a scanning electron microscope (SEM). As a preferable membrane thickness measurement method, there is a method in which an image of a cross-section of the separation functional layer in the thickness direction is captured by a scanning electron microscope, and the image is processed by importing the image into appropriate image processing software. Examples of the image processing software include, for example, ImageJ (developer: National Institutes of Health, USA). From the SEM image imported into ImageJ, the outline of the separation functional layer is extracted, the inside is filled in, the area of the separation functional layer is calculated, and using a calibration curve prepared in advance, this is converted to the average thickness of the separation functional layer in one image.

[Concave/Convex Structure of Separation Functional Layer]

In the forward osmosis membrane of the present embodiment, the separation functional layer preferably has a concave/convex structure having an arithmetic mean height (Sa) of 40 nm or more.

That the separation functional layer having a "concave/convex structure" means that the outermost surface of the separation functional layer, i.e., the surface of the separation functional layer opposite to the surface in contact with the support membrane, has a plurality of projections and recesses, and these are repeated. The concave/convex structure having an arithmetic mean height (Sa) of 40 nm or more means that the arithmetic mean height (Sa) as defined in ISO 25178 is 40 nm or more when the surface roughness of the outermost surface of the separation functional layer is measured.

The arithmetic mean height (Sa) of the concave/convex structure of the separation functional layer is preferably 60 nm or more, and more preferably 100 nm or more, from the viewpoint that the separation functional layer easily follows deformation when the support membrane is deformed. In actual use, depending on the properties of the liquid permeating the forward osmosis membrane, there is a possibility that substances that are likely to adhere to the membrane surface may be mixed in with the concave/convex structure of the separation functional layer. In such a case, from the viewpoint of reducing deposition, the separation functional layer preferably has an arithmetic mean height (Sa) of 300 nm or less, more preferably 200 nm or less, and further preferably 150 nm or less.

The arithmetic mean height (Sa) of the relief structure of the separation functional layer can be analyzed by atomic force microscopy (AFM).

Specifically, under conditions where the forward osmosis membrane is not dry, AFM observation is carried out using the exposed separation functional layer surface as an observation sample. Examples of measurement conditions include the following conditions.

Measurement mode: QNM in fluid (measurement in pure water)
Size of field of view: 3 $\mu$m square
Probe used: OLTESPA

For example, under the above conditions, it is preferable to scan the outermost surface of the separation functional layer, measure the arithmetic mean height (Sa), and evaluate as the average value of 10 samples.

[Forward Osmosis Membrane and Forward Osmosis Evaluation]

The forward osmosis membrane of the present embodiment has a high water permeability property (Flux or F) and low salt back diffusion amount (RSF or R).

The water permeability F and salt back diffusion amount R of the forward osmosis membrane of the present embodiment are evaluated by carrying out a forward osmosis treatment using purified water as the feed solution, a 3.5% by mass sodium chloride aqueous solution as the draw solution, and under the condition wherein each solution is at 25 °C.

The water permeability F may differ significantly depending on whether the feed solution and the draw solution are arranged on the separation functional layer side or the support membrane side.

In the present embodiment, it is desirable that when the forward osmosis membrane is put into actual use, the feed solution be arranged on the separation functional layer side and the draw solution be arranged on the support membrane side in order to further reduce the risk of contamination of the membrane. When evaluating the water permeability property of the forward osmosis membrane and the amount of salt back diffusion, it is desirable to evaluate by arranging the feed solution on the separation functional layer side and the draw solution on the support membrane side so as to reflect the performance in actual use.

The salt back diffusion amount R (RSF) of the forward osmosis membrane means the amount of solute transferred from the draw solution to the feed solution when the feed solution is arranged on the separation functional layer side and the draw solution having a higher osmotic pressure therethan arranged on the support membrane side, with the forward osmosis membrane in between. The salt back diffusion amount R is defined by the following formula (1).

$$R = G/(M \times H) \ (1)$$

where G is the amount of solute transferred (g), M is the effective surface area of the forward osmosis membrane ($m^2$), and H is time (hr).

The salt back diffusion amount R of the forward osmosis membrane of the present embodiment is preferably as low as possible. The greater the salt back diffusion amount, problems such as an increase in the amount of solute contamination of the draw solution to the feed solution; an increase in the amount of solute in the feed solution mixed into the draw solution; a decrease in the purity of the feed solution concentrate, resulting in an imbalance of components; contamination of the draw solution; and depletion of components in the draw solution over time occur. In one aspect, the salt back diffusion amount R of the forward osmosis membrane of the present embodiment is 2.0 g/($m^2 \times$hr) or less, preferably 1.2 g/($m^2 \times$hr) or less, more preferably is 0.80 g/($m^2 \times$hr) or less, further preferably 0.40 g/($m^2 \times$hr) or less, and particularly preferably 0.30 g/($m^2 \times$hr) or less. Even if the salt back diffusion amount R of the forward osmosis membrane of the present embodiment is 0.001 g/($m^2 \times$hr) or more, the advantageous effects expected by the present invention are exhibited.

The water permeability F (Flux) of the forward osmosis membrane means the amount of water that moves from the feed solution to the draw solution when the forward osmosis membrane is interposed between the feed solution arranged on the separation functional layer side and the draw solution having a higher osmotic pressure therethan arranged on the support membrane side. The water permeability F of the forward osmosis membrane is defined by the following formula (2):

$$F = L/(M \times H) \ (2)$$

where L is the amount of permeated water (kg), M is the effective surface area of the forward osmosis membrane ($m^2$), and H is time (hr).

The higher the water permeability F of the forward osmosis membrane of the present embodiment, the better. From the viewpoint of achieving highly efficient solvent transfer, the water permeability property of the forward osmosis membrane is preferably 1.0 kg/($m^2 \times$hr) or more, more preferably 3.0 kg/($m^2 \times$hr) or more, more preferably 5.0 kg/($m^2 \times$hr) or more, and particularly preferably 7.0 kg/($m^2 \times$hr) or more. Conversely, if the water permeability is excessively high, the amount of salt back diffusion may increase, and as a result, the water permeability F of the forward osmosis membrane is preferably 50 kg/($m^2 \times$hr) or less.

In the present embodiment, the salt permeability R/F (RSF/Flux: unit g/kg), which is defined as the value obtained by dividing the salt back diffusion amount R by the water permeability F, is an index representing the selectivity between solvent permeation and salt permeation. The lower this value, the more difficult it is for salt to permeate and the easier it is for solvent to permeate. Thus, the lower the value, the better.

In conventional general forward osmosis membranes, when the amount of salt back diffusion is low, the water permeability is often remarkably low, and as a result, the value of R/F is often large. However, the forward osmosis membrane of the present embodiment exhibits a sufficiently low salt back diffusion amount.

From the viewpoint of the practicality of concentrating the feed solution and the highly efficient transfer of the solvent, in the initial state (standard), the R/F value of the forward osmosis membrane of the present embodiment is preferably 0.20 g/kg or less, more preferably 0.15 g/kg or less, further preferably 0.08 g/kg or less, particularly preferably 0.06 g/kg or less, and most preferably 0.04 g/kg or less. The R/F value is ideally 0 g/kg, but may be, for example, 0.0001 g/kg or more from the viewpoint of ease of production of the forward osmosis membrane.

In the present embodiment, the physical durability of the forward osmosis membrane can be evaluated by applying a predetermined transmembrane pressure and carrying out forward osmosis.

Transmembrane pressure may be applied on either side of the forward osmosis membrane as positive. However, for example, forward osmosis membrane performance and physical durability can be simultaneously evaluated by applying a transmembrane pressure positive to the support membrane side and the draw solution side of the forward osmosis membrane and carrying out forward osmosis evaluation. In this case, pressure is exerted in the direction of peeling of the separation functional layer from the support membrane. Thus, if the physical durability of the forward osmosis membrane is low, it may not be able to withstand this pressure, and a part of the separation functional layer may peel from the support membrane, or a part of the separation functional layer may crack. As a result, the separation functional layer is irreversibly altered, and the draw solution is more likely to permeate to the feed solution side, resulting in significantly increased salt back diffusion amount R and salt permeability R/F.

Thus, the degree of physical durability of the forward osmosis membrane, and in particular the separation functional layer, can be examined by measuring the amount of salt back diffusion and salt permeability by carrying out forward osmosis treatment with a given transmembrane pressure applied.

The specific method for evaluating the physical durability of the forward osmosis membrane is, for example, as follows.

First, using purified water as a feed solution, using a 3.5% by mass sodium chloride aqueous solution as a draw solution, with each solution at 25 °C, forward osmosis treatment is carried out under a standard pressure of 20 kPa with a transmembrane pressure positive on the support membrane side and the draw solution side, the water permeability F and salt reverse diffusion R are determined, and these are used as reference values. Next, after washing the forward osmosis membrane with water, the transmembrane pressure is changed to a predetermined pressure which is higher than the reference pressure, and forward osmosis treatment is carried out under otherwise the same conditions to determine the water permeability F and salt reverse diffusion R. After washing the forward osmosis membrane again with water, forward osmosis treatment is carried out at the above reference pressure, and the water permeability F and salt reverse diffusion R are determined. Using these values as the water permeability property and reverse salt diffusion after applying a predetermined transmembrane pressure, the R/F value after applying a predetermined pressure is calculated.

The ratio obtained by dividing the reference value R/F by the R/F value after applying the predetermined pressure can be expressed as a percentage, which can be evaluated as the performance maintenance rate (%) after applying the predetermined pressure.

The predetermined transmembrane pressure which is higher than the reference pressure applied to evaluate the physical durability of the forward osmosis membrane is, for example, 50 to 200 kPa. Specifically, for example, by repeatedly carrying out forward osmosis treatment with the transmembrane pressure increased by 10 to 50 kPa and forward osmosis treatment under standard conditions, the R/F value after each transmembrane pressure application can be determined.

In the forward osmosis membrane of the present embodiment, when the forward osmosis membrane is interposed between a feed solution arranged on the separation functional layer side and a draw solution having a higher osmic pressure therethan arranged on the support membrane side, a forward osmosis treatment is carried out at a transmembrane pressure P = 100 (kPa), with the porous support side as the positive side, and a forward osmosis treatment is then carried out at a transmembrane pressure P = 20 kPa, with the porous support side as the positive side, a ratio ($R_{100}/F_{100}$) of a water permeability ($F_{100}$, unit: kg/(m$^2\times$hr)) and a salt back diffusion amount ($R_{100}$, unit: g/(m$^2\times$hr) satisfies the following formula:

$$0 \text{ g/kg} \leq R_{100}/F_{100} \leq 0.12 \text{ g/kg}$$

The ratio $R_{100}/F_{100}$ is preferably 0.10 g/kg or less, more preferably 0.091 g/kg or less ($R_{100}/F_{100} \geq 11.0$ kg/g), further preferably 0.08 g/kg or less, and particularly preferably 0.067 g/kg or less ($F_{100}/R_{100} \geq 15.0$ kg/g), and may be 0.06 g/kg or less or 0.05 g/kg or less.

From a similar point of view, in the forward osmosis membrane of the present embodiment, when the forward osmosis membrane is interposed between a feed solution arranged on the separation functional layer side and a draw solution having a higher osmic pressure therethan arranged on the support membrane side, a forward osmosis treatment is carried out at a transmembrane pressure P = 150 (kPa), with the porous support side as the positive side, and a forward osmosis treatment is then carried out at a transmembrane pressure P = 20 kPa, with the porous support side as the positive side, a ratio ($R_{150}/F_{150}$) of a water permeability ($F_{150}$, unit: kg/(m$^2$×hr)) and a salt back diffusion amount ($R_{150}$, unit: g/(m$^2$×hr) satisfies the following formula:

$$0 \text{ g/kg} \leq R_{150}/F_{150} \leq 0.15 \text{ g/kg}$$

The ratio $R_{150}/F_{150}$ is more preferably 0.12 g/kg or less, further preferably 0.10 (g/kg) or less ($F_{150}/R_{150} \geq 10.0$ kg/g), and is particularly preferably 0.09 (g/kg) or less, and may be 0.075 g/kg or less ($F_{150}/R_{150} \geq 13.3$ kg/g).

From the viewpoint that the solute blocking performance is further enhanced and the performance is maintained over long periods of time, in the forward osmosis membrane of the present embodiment, when the forward osmosis membrane is interposed between a feed solution arranged on the separation functional layer side and a draw solution having a higher osmic pressure therethan arranged on the support membrane side, a forward osmosis treatment is carried out at a transmembrane pressure P = 200 (kPa), with the porous support side as the positive side, and a forward osmosis treatment is then carried out at a transmembrane pressure P = 20 kPa, with the porous support side as the positive side, a ratio ($R_{200}/F_{200}$) of a water permeability ($F_{200}$, unit: kg/(m$^2$×hr)) and a salt back diffusion amount ($R_{200}$, unit: g/(m$^2$×hr) satisfies the following formula:

$$0 \text{ g/kg} \leq R_{200}/F_{200} \leq 0.30 \text{ g/kg}$$

The ratio $R_{200}/F_{200}$ is more preferably 0.15 g/kg or less, further preferably 0.10 (g/kg) or less ($F_{200}/R_{200} \geq 10.0$ kg/g), and particularly preferably 0.08 (g/kg) or less ($F_{200}/R_{200} \geq 12.5$ kg/g) or 0.07 (g/kg) or less.

The present inventors have discovered that when the RSF/Flux value, after applying a transmembrane pressure of 100 to 200 kPa with the porous support side as positive is applied to a forward osmosis membrane composed of a porous support and a separation functional layer, is small, the forward osmosis membrane is highly resistant to organic solvents, and in particular alcohols.

It is believed that the separation functional layer is maintained by partially entering the pores of the porous support and acquires physical durability.

However, when the forward osmosis membrane of the prior art is brought into contact with an organic solvent, it is believed that the pores of the porous support will also enlarge slightly when the support membrane and the separation functional layer swell with the organic solvent. As the pores of the porous support become larger, the physical durability of the porous support decreases and the separation functional layer may peel. As a result, part of the separation functional layer is damaged, impairing the function of the forward osmosis membrane.

In a forward osmosis membrane having a base material such as non-woven fabric, the support membrane is composed of the base material and porous support. As a result, the support membrane may be partially damaged because the base material and porous support constituting the support membrane swell at different degrees of swelling. As a result, in a forward osmosis membrane comprising a base material when in contact with an organic solvent\, the separation functional layer is also damaged, resulting in impaired forward osmosis performance.

In contrast thereto, the forward osmosis membrane of the present embodiment has high physical durability, and is excellent in durability against organic solvents even when the organic solvents in contact therewith cause swelling.

Though the reason is not clear, the present inventors believe that in the forward osmosis membrane of the present embodiment, the pore structure of the porous support is uniform and moderately small throughout the membrane, and the separation functional layer is formed on the porous support without defects. As a result of such a configuration, in the forward osmosis membrane of the present embodiment, strong entanglement between the separation functional layer and the pores near the surface of the porous support membrane occurs over the entire surface of the membrane. It is thought that durability is advantageously exhibited by maintaining the separation functional layer since the strong entanglement is maintained even after swelling due to contact with an organic solvent.

When forward osmosis evaluation is carried out by applying a transmembrane pressure with the support membrane side and the draw solution side of the forward osmosis membrane as positive, the pressure is applied in the direction of peeling of the separation functional layer from the support membrane. Thus, the degree of physical durability of the forward osmosis membrane, and in particular the separation functional layer, can be evaluated by carrying out forward osmosis treatment under a predetermined transmembrane pressure and measuring the amount of salt back diffusion and salt permeability.

Specific methods for evaluating the ratio ($R_{100}/F_{100}$), the ratio ($R_{150}/F_{150}$), and the ratio ($R_{200}/F_{200}$) are, for example, as follows.

First, forward osmosis treatment is carried out using purified water as a feed solution, using a 3.5% by mass sodium chloride aqueous solution as a draw solution, with each solution at 25 °C, at a transmembrane pressure of 20 kPa with the support membrane side and the draw solution side as positive, the water permeability F and the salt reverse diffusion R are determined, and these are used as reference values. Next, after washing the forward osmosis membrane with water, the transmembrane pressure is changed to a predetermined pressure which is higher than the reference pressure, and forward osmosis treatment is carried out under otherwise the same conditions. After washing the forward osmosis membrane again with water, forward osmosis treatment is carried out under the above reference pressure, and the water permeability F and salt reverse diffusion R are determined. After carrying out forward osmosis while applying a predetermined transmembrane pressure, the values of R/F are calculated from these values as water permeability property and salt reverse diffusion when forward osmosis treatment is carried out under a reference pressure with the support membrane side being positive.

In order to evaluate the ratio ($R_{100}/F_{100}$), ratio ($R_{150}/F_{150}$), and ratio ($R_{200}/F_{200}$), for example, a method in which forward osmosis treatment is carried out with the transmembrane pressure increased by 10 to 50 kPa in a range of 50 to 200 kPa, as the predetermined transmembrane pressure higher than the reference pressure, and forward osmosis treatment under the reference conditions is repeated to obtained the desired rating.

In the forward osmosis membrane of the present embodiment, from the viewpoint of practicality in forward osmosis treatment, the value of the forward osmosis membrane performance R/F after contact with an organic solvent is preferably 0.30 g/kg or less, more preferably 0.25 g/kg or less, further preferably 0.16 g/kg or less, particularly preferably 0.11 g/kg or less, and most preferably 0.07 g/kg or less.

The performance maintenance rate (%) can be calculated using the R/F ratio before and after contact with the organic solvent. The performance maintenance rate (%) before and after contact with the organic solvent, which is calculated by dividing the R/F value before contact with the organic solvent by the R/F value after contact with the organic solvent, is preferably 20% or more, more preferably 35% or more, further preferably 50% or more, particularly preferably 70% or more, and most preferably 90% or more. The higher the performance maintenance rate, the more practical forward osmosis membrane performance can be exhibited in the forward osmosis treatment of a solution containing an organic solvent, which is preferable.

[Organic Solvent and Organic Compound]

As the organic solvent with which the forward osmosis membrane contacts in the present embodiment, any substance may be used as long as the forward osmosis membrane is not instantaneously dissolved therein. Instant dissolution of the forward osmosis membrane means that when brought into contact with an organic solvent, the forward osmosis membrane loses its original form within 1 hour.

The organic solvent may be a common organic solvent used for industrial and research purposes. Examples of organic solvents include lower alcohols such as methanol, ethanol, 1-propanol, and 2-propanol; nitriles such as acetonitrile; higher alcohols having 6 or more carbon atoms; glycols such as ethylene glycol and propylene glycol; hydrocarbons such as pentane, hexane, decane, undecane, and cyclooctane; mixtures of one or more of these, and mixtures of these with water.

Examples of organic solvents which are often contained in food products and pharmaceuticals and which preferably have durability in the forward osmosis membrane include alcohols, glycols, and nitriles.

Examples of organic compounds include carboxylic acids such as acetic acid, acrylic acid, propionic acid, formic acid, lactic acid, oxalic acid, tartaric acid, and benzoic acid; organic acids such as sulfonic acid, sulfinic acid, habituric acid, uric acid, phenol, enol, diketone-type compounds, thiophenol, imide, oxime, aromatic sulfonamide, primary nitro compounds, and secondary nitro compounds; aromatic hydrocarbons such as benzene, toluene, and xylene; mineral oils; ketones such as acetone and methyl isobutyl ketone; aldehydes such as acetaldehyde; ethers such as dioxane and tetrahydrofuran; amides such as dimethylformamide and N-methylpyrrolidone; nitrogen-containing organic compounds such as pyridine; esters such as acetate esters and acrylate esters; organic compounds such as dimethyl sulfoxide for industrial and research purposes, sugars, fertilizers, and enzymes.

The durability of the forward osmosis membrane may become a problem when these organic compounds come into contact with the forward osmosis membrane of the present embodiment in a state in which they are contained in the above organic solvent within a range in which the forward osmosis membrane is not instantaneously dissolved.

The organic solvent resistance of the forward osmosis membrane of the present embodiment, for example, the resistance to alcohol (especially ethanol), can be examined by the method shown in the Examples, which will be described later.

[Shape of Forward Osmosis Membrane]

The forward osmosis membrane of the present embodiment is preferably hollow fiber-like. Hollow fiber-like forward osmosis membranes tend to have high performance as forward osmosis membranes because defects in the separation functional layer are reduced.

In the hollow fiber forward osmosis membrane, at least one separation functional layer is preferably on the inner surface of the hollow fiber support membrane in order to prevent physical damage to the separation functional layer.

[Draw Solution]

The draw solution is a solution that exhibits a higher osmotic pressure than the feed solution and has the function of moving the solvent from the feed solution via a forward osmosis membrane.

This draw solution expresses a high osmotic pressure by containing a high concentration of draw solute.

Draw solutes include, for example, alkali metal salts, alkaline earth metal salts, ammonium salts, sugars, monoalcohols, glycols, and water-soluble polymers. Specific examples of these include:

alkali metal salts such as sodium chloride, potassium chloride, sodium sulfate, sodium thiosulfate, and sodium sulfite;
alkaline earth metal salts such as magnesium chloride, calcium chloride, and magnesium sulfate;
ammonium salts such as ammonium chloride, ammonium sulfate, and ammonium carbonate;
as sugars, for example, in addition to general sugars such as sucrose, fructose, and glucose, special sugars such as oligosaccharides and rare sugars;
monoalcohols such as methanol, ethanol, 1-propanol, and 2-propanol;
glycols such as ethylene glycol and propylene glycol;
and water-soluble polymers such as polyethylene oxide, polypropylene oxide, and copolymers of ethylene oxide and propylene oxide.

[Module]

The support membrane and forward osmosis membrane of the present embodiment can each be used as a module (indicator membrane module or forward osmosis membrane module) containing a plurality of membranes in a housing. The shape of the module is not particularly limited. However, it is preferable that the module have a structure in which there is a compartment in contact with the liquid only on one surface side of the membrane and a compartment in contact with the liquid only on the other surface side of the membrane are separated by the adhesive resin that fixes the membrane to the module housing.

Taking the case where the support membrane or forward osmosis membrane is hollow-fiber like as an example, a hollow fiber membrane module having a structure in which a housing contains a plurality of hollow fiber membranes, and a compartment in contact with liquid only on the inner surface side of the hollow fiber membrane, and a compartment in contact with liquid only on the outer surface side of the membrane are separated from each other.

The size of the housing is not particularly limited. However, for example, a cylindrical housing having a diameter of 5 to 500 mm and a length of 20 to 10,000 mm can be used. As the adhesive resin, for example, a urethane-based or epoxy-based adhesive can be used.

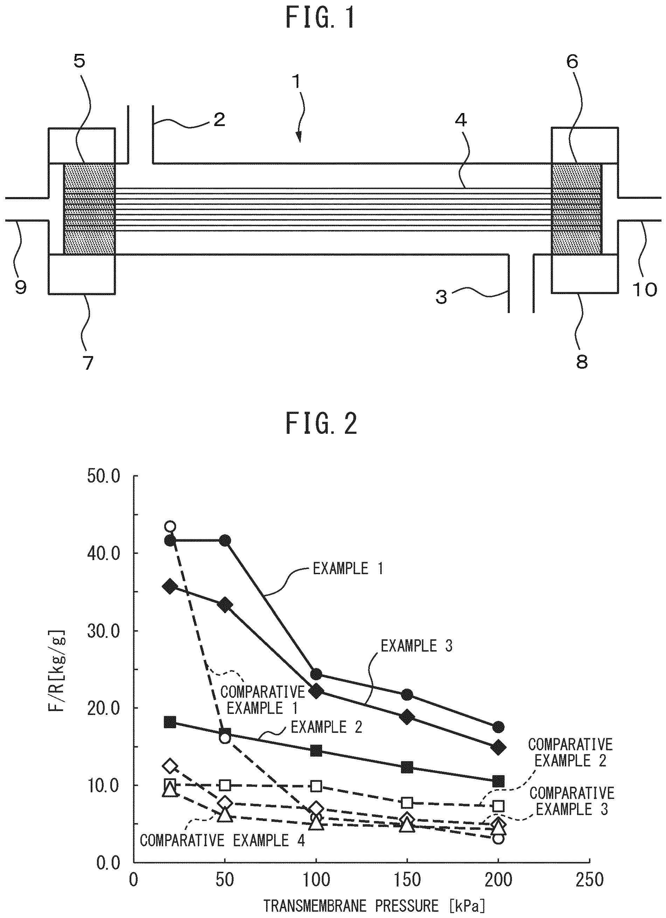

FIG. 1 shows a schematic cross-sectional view showing the structure of an example of a hollow fiber membrane module.

The hollow fiber membrane module (1) shown in FIG. 1 has a structure in which a fiber bundle consisting of a plurality hollow fiber membranes (4) is filled in a cylindrical housing, and both ends of the hollow fiber bundle are affixed to the cylinder with adhesive affixation parts (5, 6). The housing has outer conduits (2,3) on the sides thereof and is sealed by headers (7, 8). The adhesive affixation parts (5, 6) are each solidified so as not to block the hollow part of the hollow fiber membrane (4). The headers (7, 8) respectively have inner conduits (9, 10) that communicate with the inside (hollow portion) of the hollow fiber membrane (4) and do not communicate with the outside. These inner conduits (9, 10) allow the introduction or removal of liquids inside the hollow fiber membrane (4). The outer conduits (2, 3) each communicate with the outside of the hollow fiber membrane (4) and do not communicate with the inside.

This hollow fiber membrane module (1) has a structure in which the liquid flowing inside and the liquid flowing outside contact only through the hollow fiber membrane (4).

[Membrane Area]

In the present embodiment, the membrane area refers to the size of the area where the forward osmosis membrane comes into contact with the feed solution and can exhibit a separation function. Specifically, it represents the area of the part of the forward osmosis membrane that comes into contact with the feed solution or the draw solution.

More specifically, for example, in the case of a forward osmosis membrane module on a hollow fiber membrane that supplies the feed solution to the inside thereof, from the length, inner diameter, and number of the hollow fiber membrane-like forward osmosis membranes excluding the adhesive affixation part in the module, the membrane area (inner surface area of hollow fiber membrane-like forward osmosis membrane) is defined by the following formula (3).

$$a = c \times \pi \times b \times n \ (3)$$

where a is the internal surface area of the hollow fiber membrane-like forward osmosis membrane ($m^2$), b is the length of the hollow fiber membrane-like forward osmosis membrane excluding the adhesive affixation part (m), c is the inner diameter (m) of the hollow fiber membrane-like forward osmosis membrane, and n is the number of hollow fiber membrane-like forward osmosis membranes.

The inner surface area of the hollow-fiber-like support membrane module when the support membrane is hollow fiber-like can also be calculated according to the above.

The length of the hollow fibers of the modularized hollow-fiber-like support membrane or hollow-fiber-like forward osmosis membrane, excluding the adhesive affixation part, is sometimes referred to as the "effective length."

< <Method for Production of Support Membrane>>

The methods for the production of a hollow fiber-like support membrane and a flat membrane-like support membrane are described in detail below.

[Method for Production of Hollow Fiber Support Membrane]

In the present embodiment, a hollow fiber support membrane comprising a hollow fiber-like porous support which is particularly preferable can be produced by a known dry-wet membrane-forming method, melt membrane-forming method, or wet membrane-forming method using a material selected from the thermoplastic resins described above. Among these, a dry-wet spinning method in which a spinning stock solution comprising a resin (polymer) dissolved in a solvent and an internal coagulation solution are discharged from a double annular nozzle (spinner) followed by running through a hollow space and then coagulation in a coagulation bath containing an external coagulation liquid to form a hollow fiber membrane is preferably used. The obtained hollow fibers may be wound on a winder and cut to predetermined lengths.

(Spinning Stock Solution)

As the solvent (good solvent) for the spinning stock solution in this method, an aprotic polar organic solvent such as N-methyl-2-pyrrolidone, dimethylacetamide, or dimethylformamide is preferably used. Further, the spinning stock solution may contain a non-solvent of the resin. As the non-solvent in the spinning stock solution, glycols such as polyethylene glycol and polypropylene glycol, as well as electrolytes, and polyvinylpyrrolidone can be used. Among these, glycols are preferable because of their spinnability and the good quality of the membranes obtained.

The solvent/non-solvent ratio is preferably set so that the mass ratio of non-solvent/(solvent + non-solvent) is within the range of 50 to 90% of the mass ratio at the compatibility limit. The compatibility limit is the point at which the polymer solution cannot become a uniform solution and undergoes phase separation. Since the compatibility limit is also generally a function of temperature, the non-solvent content should be set based on the compatibility limit at the spinning temperature.

If the mass ratio of non-solvent/(good solvent + non-solvent) is less than 50% of the mass ratio at the limit of compatibility, the viscosity of the spinning stock solution may be excessively low and spinnability may deteriorate. Conversely, if this value exceeds 90%, the controllability of the cross-sectional shape of the hollow fiber support membrane may deteriorate.

For the same reason, the temperature of the spinning stock solution when forming the hollow fiber porous support is preferably 30 to 80 °C, and more preferably 35 to 60 °C.

The polymer concentration in the spinning stock solution is preferably 10 to 30% by mass, more preferably 15 to 25% by mass. The polymer concentration in the spinning stock solution is particularly related to the strength of the resulting hollow fiber support membrane. When the polymer concentration in the spinning stock solution is within the above range, a hollow fiber support membrane having excellent membrane strength can be obtained.

When the spinning stock solution is prepared, the spinning stock solution may be stirred at a predetermined temperature for 24 hours or more and then defoamed under reduced pressure.

(Internal Coagulation Liquid)

At the time of membrane formation of the hollow fiber-like porous support, for example, as described above, a double spinning nozzle is used, the spinning stock solution is discharged from the outer ring-shaped opening, and the internal coagulation liquid is discharged from the inner opening.

As the internal coagulation liquid, for example, an aqueous solution containing water as a main component and containing one or more additives selected from alcohols, ethylene glycols, and amide solvents can be used.

Examples of alcohols include methanol, ethanol, and isopropyl alcohol. Examples of ethylene glycols include triethylene glycol, tetraethylene glycol, and glycerin. Examples of amide solvents include N-methyl-2-pyrrolidone, N,N-dimethylacetamide, and N,N-dimethylformamide.

By adding such an additive to the internal coagulation liquid, the coagulation speed can be controlled, and a porous support having a desired structure can easily be obtained. For example, if an additive is added to the internal coagulation liquid, the coagulation will be slowed and the pore size of the surface can be coarsened. However, if the amount of the additive added to the internal coagulation liquid is excessive, the spinning stability may deteriorate, or the surface pore size may become coarse, making it difficult to form the separation functional layer.

As the internal coagulation liquid, it is preferable to use water or a mixed liquid of water and a small amount of an additive from the standpoint of spinning stability and variability of membrane performance. When a glycol is added as the additive to the internal coagulation liquid, the amount added is preferably 60% by mass or less, more preferably 40% by mass or less, further preferably 20% by mass or less, particularly preferably 10% by mass or less, and most preferably 5% by mass or less. If this value exceeds 60% by mass, it becomes difficult to maintain the balance between the sizes of the pores on the inner and outer surfaces of the obtained hollow fiber membrane, and the pores on the inner surface tend to be particularly coarse.

Water is preferably used as the internal coagulation liquid.

The internal coagulation liquid is preferably adjusted to an appropriate temperature before being subjected to spinning.

By setting the temperature of the internal coagulation liquid to a certain value or less, the structure near the inner surface of the hollow fiber support membrane becomes more uniform. Conversely, by setting the temperature of the internal coagulation liquid to a certain value or higher, the denseness of the structure on the inner surface side of the hollow fiber support membrane is easily maintained within an appropriate range. If the density of the structure on the inner surface side of the hollow fiber support membrane is appropriate, the monomer is appropriately supplied during the formation of the separation functional layer of the forward osmosis membrane, resulting in a forward osmosis membrane with good performance. The resistance of the structural portion of the membrane is restricted to an appropriate range, and a high water permeability property as a forward osmosis membrane is exhibited.

For these reasons, the temperature of the internal coagulation liquid is preferably 5 to 55 °C, more preferably 10 to 40 °C, and further preferably 15 to 35 °C.

(External Coagulation Liquid)

As the external coagulation liquid used as the coagulating bath, one or more selected from water, non-solvents exemplified as additives for the internal coagulation liquid, and other organic solvents can be used.

The external coagulation liquid may be a liquid having the same composition as the internal coagulation liquid, or a liquid having a different composition.

As the external coagulation liquid, it is preferable to use water or a mixture of water and a non-solvent exemplified above as an additive for the internal coagulation liquid.

When a mixture of water, alcohol, ethylene glycol, and an amide solvent is used as the external coagulation bath, the additive amount selected from the alcohol, ethylene glycol, and amide solvent is preferably 40% by mass or less, more preferably 30% by mass or less, further preferably 15% by mass or less, and particularly preferably 5% by mass or less, relative to the total mass. Water is most preferable as the external coagulation liquid.

When the amount of the additive in the external coagulation solution is excessive, coagulation on the outer surface side of the hollow fiber support membrane may be delayed and the membrane shape may become uneven.

The temperature of the coagulation bath is preferably 10 to 60 °C, more preferably 20 to 50 °C, and further preferably 25 to 40 °C.

When the temperature of the coagulation bath is high, the structure of the resulting hollow fiber support membrane tends to become sparse, and accordingly, the water permeability property of the resulting forward osmosis membrane tends to increase. When the temperature of the coagulation bath is excessively high, the pore size of the surface tends to increase, resulting in inadequate passage of the chemical solution in the subsequent formation of the separation functional layer, which may increase the salt back diffusion amount of the resulting forward osmosis membrane.

Conversely, when the temperature of the coagulation bath is low, the structure of the support membrane tends to be dense, and the water permeability property of the hollow fiber support membrane and forward osmosis membrane may be low. The lower the temperature of the coagulation bath, the higher the spinning stability, and the more uniform the structure of the obtained hollow fiber membrane tends to be.

(Free Running Distance)

The air feed distance from the spinneret to the coagulation bath should be appropriately set according to the spinning conditions and the size of the spinneret. However, from the viewpoint of the structure of the hollow fiber support membrane and the uniformity of the surface pore size, the free running distance is preferably 100 to 500 mm, more preferably 200 to 400 mm.

By appropriately controlling the temperature and humidity of the air feeding section, hollow fibers having a more uniform structure can be obtained. From this point of view, the temperature of the idle running portion is preferably 15 to 50 °C, more preferably 25 to 40 °C. The relative humidity of the idle running portion is preferably 40 to 100%, more preferably 70 to 100%, and still more preferably 90 to 100%.

(Winding)

The coagulated hollow fiber membrane is then wound on a winder.

The tension at the time of winding the hollow fiber membrane can be adjusted by the discharge speed of the spinning stock solution, the winding speed, and the type and number of turn rolls.

It is preferable that the tension during winding of the hollow fiber membrane be appropriately set in consideration of the composition of the spinning stock solution.

In the present embodiment, the tension (unit: g) at the time of winding is a value measured by sandwiching a running hollow fiber membrane using a tensiometer.

The tension during winding of the hollow fiber membrane is preferably from 4 to 60 g, more preferably from 10 g to less than 40 g, even more preferably from 10 to 38 g, so as not to cause thread breakage. When the tension during winding is 4 g or more, particularly 5 g or more, meandering and sagging of the hollow fiber membrane does not occur during winding, and stable spinning can be achieved. In addition, fluctuations in the structure and physical properties of the obtained hollow fiber membrane are reduced, which is preferable. When the tension at the time of winding is 60 g or less, particularly less than 40 g, distortion at the center of the thickness of the hollow fiber can be suppressed, and the compressive strength can be increased. The tension during winding is particularly preferably 10 g to 35 g. By keeping the tension within this range during winding and by appropriately adjusting the temperature and humidity of the spinning stock solution, the air feeding section, the internal coagulation liquid, and the external coagulation liquid, the spinning is stabilized and the obtained hollow fiber is more preferable because the uniformity of the surface structure of the membrane is increased.

[Method for Production of Flat Support Membrane]

A flat membrane-like support membrane can be produced, for example, by the following method using the resin solution exemplified as one used in the production of the hollow fiber support membrane.

For example, a flat membrane-like support membrane can be obtained by application of a resin solution on a glass substrate, immersion in a coagulating solution for coagulation, and then peeling of the coagulated support membrane from the glass substrate.

Membrane-formation conditions such as the composition of the resin solution and the composition of the coagulation liquid can be appropriately set by a person skilled in the art with reference to known techniques and the above-described method for producing a hollow fiber support membrane.

[Step of Forming Separation Functional Layer]

A forward osmosis membrane can be obtained by forming a separation functional layer on the support membrane thus obtained.

An example of a method for forming a separation functional layer containing polyamide as a main component on a support membrane is described below.

The separation functional layer mainly composed of polyamide can be formed by interfacial polycondensation on the surface of the porous support using an aqueous solution containing a polyfunctional amine and an organic solvent solution containing a polyfunctional acid halide.

As a preferred method for forming the separation functional layer in the present embodiment, for example, there is a method in which a first solution containing one of a polyfunctional amine and a polyfunctional acid halide and a second solution containing the other are sequentially passed over the support membrane. An aspect in which both the polyfunctional amine and the polyfunctional acid halide are contained in one solution is not preferable.

In the present embodiment, for example, the first solution may contain a polyfunctional amine and the second solution may contain a polyfunctional acid halide.

[Polyfunctional Amine]

A polyfunctional amine is an amine having two or more of at least one of a primary amino group and a secondary amino group in one molecule, and at least one of the amino groups is a primary amino group. Examples thereof include aromatic polyfunctional amines such as o-phenylenediamine, m-phenylenediamine, p-phenylenediamine, o-xylylenediamine, m-xylylenediamine, p-xylylenediamine, 1,3,5-triaminobenzene, 1,2,4-triaminobenzene, 3,5-diaminobenzoic acid, 3-aminobenzylamine, and 4-aminobenzylamine; aliphatic amines such as ethylenediamine and propylenediamine; and alicyclic polyfunctional amines such as 1,2-diaminocyclohexane, 1,4-diaminocyclohexane, 4-aminopiperidine, and 4-aminoethylpiperazine. Among these, in consideration of separation performance, water permeation resistance, and heat resistance, an aromatic polyfunctional amine having 2 to 4 of at least one of primary amino groups and secondary amino groups in one molecule is preferable. As such a polyfunctional aromatic amine, m-phenylenediamine, p-phenylenediamine, or 1,3,5-triaminobenzene is preferably used. In particular, it is more preferable to use m-phenylenediamine because of its availability and ease of handling. These polyfunctional amines can be used alone or as a mixture of two or more. When mixing two or more polyfunctional amines, the amines may be combined, or an amine may be combined with an amine having at least two secondary amino groups in one molecule. Examples of amines having at least two secondary amino groups in one molecule include piperazine and 1,3-bispiperidylpropane.

[Polyfunctional Acid Halide]

A polyfunctional acid halide is an acid halide having at least two halogenated carbonyl groups in one molecule. Examples of trifunctional acid halides include trimesic acid chloride, 1,3,5-cyclohexanetricarboxylic acid trichloride, and 1,2,4-cyclobutanetricarboxylic acid trichloride, and
examples of bifunctional acid halides include aromatic bifunctional acid halides such as biphenyldicarboxylic acid dichloride, azobenzenedicarboxylic acid dichloride, terephthalic acid chloride, isophthalic acid chloride, and naphthalenedicarboxylic acid chloride; aliphatic bifunctional acid halides such as adipoyl chloride and sebacoyl chloride; and alicyclic bifunctional acid halides such as cyclopentanedicarboxylic acid dichloride, cyclohexanedicarboxylic acid dichloride, and tetrahydrofurandicarboxylic acid dichloride.
In consideration of reactivity with the polyfunctional amine, the polyfunctional acid halide is preferably a polyfunctional acid chloride. In consideration of separation performance and heat resistance of the resulting forward osmosis membrane, the polyfunctional acid chloride is more preferably a polyfunctional aromatic acid chloride having 2 to 4 carbonyl chloride groups in one molecule. In particular, it is preferable that trimesic acid chloride be used from the viewpoint of availability and ease of handling.
These polyfunctional acid halides can be used alone or as a mixture of two or more thereof.

[Solvent and Monomer Solution Concentration]

The polyfunctional amine and polyfunctional acid halide are each dissolved in a suitable solvent and subjected to interfacial polycondensation as a first solution or a second solution.
The solvents for the first solution and the second solution are preferably those that dissolve the monomers contained in the respective solutions, form a liquid-liquid interface without mutual solubility when the two solutions come into contact, and do not destroy the support membrane. Those which are inert to polyfunctional amine compounds and polyfunctional acid halides are more preferable.
Examples of such solvents include the following solvents:
Examples of solvents for the polyfunctional amine include one or more selected from water and alcohols. Examples of solvents for the polyfunctional acid halide include one or more selected from hydrocarbon solvents such as n-hexane, cyclohexane, n-heptane, n-octane, n-nonane, and n-decane.
By selecting the above solvents as the respective solvents for the polyfunctional amine and the polyfunctional acid halide, the polyfunctional amine solution and the polyfunctional acid halide solution become immiscible, and the interfacial polycondensation reaction proceeds, whereby a thin membrane of a high molecular weight polymer (polyamide) is obtained. The composition and concentration of each solution can be set in accordance with the type of monomer and the partition coefficient of the solvent, are not particularly limited, and can be appropriately set in accordance with the desired separation function.
For example, as an example of interfacial polycondensation when using an aqueous solution of m-phenylenediamine as the polyfunctional amine solution and an n-hexane solution of trimesic acid chloride as the polyfunctional acid halide solution, suitable monomer concentrations are as follows:
The concentration of m-phenylenediamine is preferably 0.1 to 10% by mass, and more preferably 0.5 to 5.0% by mass. The concentration of trimesic acid chloride is preferably 0.01 to 10% by mass, and more preferably 0.04 to 2.0% by mass. If the concentration of these solutions is excessively low, the formation of the polyamide separation functional layer by interfacial polycondensation is incomplete and defects are likely to occur, leading to a decrease in separation performance when used as a forward osmosis membrane. Conversely, if the concentration of the solution is excessively high, the formed separation functional layer of the polyamide becomes excessively thick, resulting in a decrease in water permeability and an increase in the amount of residual unreacted substances in the separation functional layer, which may adversely affect performance as a forward osmosis membrane.

[Additives for Polymerization]

If the polyfunctional amine solution or polyfunctional acid halide solution does not significantly interfere with the reaction between the polyfunctional amine and the polyfunctional acid halide, additives such as surfactants, organic solvents (excluding the organic solvent in the polyfunctional acid halide solution), organic acid salts, basic compounds, and antioxidants may be included.

The surfactant has the effect of improving the wettability of the porous support surface and reducing the interfacial tension between the amine solution and the non-polar solvent. Since the organic solvent may act as a catalyst for the interfacial polycondensation reaction, the addition of the organic solvent may make the interfacial polycondensation reaction more efficient. Organic acid salts can change the wettability of the surface of the support, which may lead to improved membrane formability and improved separation performance when used as a forward osmosis membrane. A basic compound can remove the hydrogen halide produced by the polymerization and thus may accelerate the polymerization.

Examples of additives for polymerization include surfactants such as sodium dodecylbenzenesulfonate, sodium dodecyl sulfate, and sodium lauryl sulfate; organic solvents such as ethanol, isopropanol, N,N-dimethylformamide, and ε-caprolactam; organic acid salts consisting of mixtures of amines such as triethylamine and organic acids such as camphorsulfonic acid; basic compounds such as sodium hydroxide, trisodium phosphate, and triethylamine; phenolic antioxidant, amine antioxidant, sulfur antioxidant, phosphorus antioxidant, and acylation catalysts.

(Heat Treatment (Curing))

In the present embodiment, it is particularly preferable to carry out heat treatment (curing) after forming the high molecular weight polymer thin membrane by interfacial polycondensation. By adjusting the higher-order structure of the high molecular weight polymer thin membrane and increasing the cross-linking density by means of this heat treatment, it is speculated that the physical durability and solvent resistance of the high molecular weight polymer thin membrane can be improved, whereby the salt back diffusion amount of the forward osmosis membrane can be reduced. In other words, by subjecting the forward osmosis membrane to heat treatment by an appropriate method, it is possible to form a forward osmosis membrane in which partial functional defects in the separation functional layer are reduced.

Heat treatment is preferably carried out in a wet state.

Examples of heat treatment methods in a wet state include permeation of a moist gas (e.g., nitrogen or air containing moisture) heated via a heat source, permeation of hot water, permeation of water vapor, and exposure to water vapor.

"Permeation" as used herein means a process of supplying a fluid to the forward osmosis membrane to bring the separation functional layer and the support membrane of the forward osmosis membrane into contact with the fluid. As a preferred method of permeation, for example, in the case of a forward osmosis membrane using a hollow fiber support membrane consisting only of the porous support, fluid is supplied to the inside or outside of the hollow fiber, or both, so that the front side, back side, and inside of the separation functional layer and the pores of the support membrane are in contact with the fluid.

If the heat treatment is carried out in a dry state, a part of the forward osmosis membrane may be excessively dried, and in particular, the pores of the support membrane may shrink, resulting in deformation of the support membrane. If the pores of the support membrane contract unevenly, the water permeability property of the resulting forward osmosis membrane may decrease. Uneven deformation of the support membrane induces deformation of the separation functional layer, which may reduce the ability of the separation functional layer to block salts. Heat treatment in a dry state may cause shrinkage or deformation of the separation functional layer. Deformation of the separation functional layer may induce cracking of the separation functional layer and degrade the salt blocking performance of the separation functional layer.

Thus, when the heat treatment is carried out in a dry state, it is preferable to limit the heat treatment time to 15 minutes or less in order to avoid the above inconvenience.

"Heat treatment" as used herein refers to a treatment of heating an object to be treated at a temperature of 50 °C or higher, and preferably at a temperature of 70 °C or higher.

The heat treatment in the present embodiment is preferably carried out by a method of supplying hot water to the forward osmosis membrane after formation of the high molecular weight polymer thin membrane, or a method of supplying high-temperature steam to the forward osmosis membrane.

Heating in this manner can further improve the physical durability of the separation functional layer. The reason is presumed as follows.

It is believed that heating by such a method brings the polymer in the separation functional layer into a state of high mobility and facilitates the acceleration of the cross-linking reaction. Thus, it is thought that the separation functional layer forms a strong adhesion accompanied by entanglement with pores near the surface of the support membrane.

In the method of supplying hot water to the forward osmosis membrane after forming the high molecular weight polymer thin membrane, a method in which hot water at 50 to 100 °C, and preferably 70 to 95 °C, is circulated to, in particular, at least the separation functional layer side, preferably both the separation functional layer side and the support membrane side of the forward osmosis membrane after formation of the separation functional layer, can suitable be used because the heat transfer efficiency is high and the cross-linking reaction of the high molecular weight polymer thin membrane is efficiently promoted. When hot water is passed through the separation functional layer side of the forward osmosis membrane, heat is uniformly transferred to the separation functional layer, and residual monomers in the support membrane are washed away, making it difficult for unintended reactions to occur. The flow time of hot water is preferably 5 minutes to 2 hours. Cross-linking reactions proceed favorably when the hot water flow time is 5 minutes or longer. Even if the hot water flow time exceeds 2 hours, the effect of the hot water flow does not increase in proportion to the time, so the hot water flow time is preferably 2 hours or less.

In the method of supplying high-temperature water vapor to the forward osmosis membrane, "high-temperature water vapor" refers to gaseous water of 100 °C or higher under high pressure conditions. High-temperature steam can be generated in a pressure vessel such as an autoclave which is generally used for high-pressure steam sterilization.

As the method of supplying high-temperature water vapor to the forward osmosis membrane, specifically, for example, a method in which steam at 100 to 160 °C, and in particular 100 to 140 °C, is supplied to the forward osmosis membrane having a separation functional layer on the inner surface of the hollow fiber support membrane, can suitable be used because it promotes the cross-linking reaction of the high molecular weight polymer thin membrane well and extremely reduces salt reverse diffusion without significantly damaging the support membrane or separation functional layer. The supply time of steam is preferably 1 minute to 4 hours. When high-temperature steam is supplied for 1 minute or longer, the cross-linking reactions proceed favorably. Even if the high-temperature steam supply time exceeds 4 hours, the degree of effect of high-temperature steam supply does not increase in proportion to the supply time, so the high-temperature steam supply time should be 4 hours or less. is preferred.

As the heat treatment in the present embodiment, only one type of heat treatment may be carried out, or two or more kinds of heat treatments may be combined, and the same treatment may be repeated a plurality of times.

When forming a separation functional layer consisting of a polymer thin membrane on the support membrane, when at least one of the first monomer and the second monomer contains a monomer having three or more reactive groups and the three-dimensional high molecular weight polymer thin membrane formed by these is subjected to the above-described heat treatment in a wet state, the above effects are more pronounced. As a result, the strength and durability of the forward osmosis membrane are improved, and salt reverse diffusion is further reduced, which is particularly preferable.

EXAMPLES

The present invention will be described in more detail below with reference to Examples and Comparative Examples, but the present invention is not limited to these Examples. Unless otherwise specified, operations are carried out at 25 °C.

Evaluations of the Examples and Comparative Examples were carried out as follows.

[Average Thickness of Separation Functional Layer]

The average thickness of the separation functional layer was determined by observing 9 electron microscope layers (cross-sectional images) obtained from the forward osmosis membrane.

Forward osmosis membranes were taken out one by one (three in total) from each of three radially outer, intermediate, and central parts of a forward osmosis membrane module, and each of these was divided into three equal parts in the longitudinal direction to obtain samples from 9 locations. A cross-section perpendicular to the membrane surface direction (longitudinal direction) was obtained at the center of each sample, and nine electron microscope layers (cross-sectional images) taken for each cross-section were used for measurement.

A cross-sectional image of each sample was obtained as follows.

The sample was immersed in pure water in a dedicated glass container, frozen with liquid nitrogen, and then dried by a freeze-drying method. By the Broad Ion Beam (BIB) processing method (processing device: E-3500, manufactured by Hitachi High-Tech Co., Ltd.), a cross section perpendicular to the membrane surface direction was prepared for the sample after drying, and a thin coating of osmium was applied to obtain an observation sample. Using a scanning electron microscope (S-4800, manufactured by Hitachi High-Tech Co., Ltd.), observation samples were photographed under the following conditions.

Accelerating voltage: 1.0 kV
Emission current: 10 $\mu$A
Probe current: Normal
Detector: Upper
Magnification: 10,000 times
Number of pixels: 1280 $\times$ 960
Working distance: 5.0 mm

The field of view for observation was determined so that a region with a width of 13 $\mu$m in the direction of the membrane surface of the sample fell within the field of view. The cross-sectional image was obtained as an 8-bit grayscale image under conditions such that the brightness value was not saturated and the contrast was as high as possible.

In each cross-sectional view, the contour of the separation functional layer was extracted by the following method.

The cross-sectional images obtained were loaded into image processing software (ImageJ; developer: National Institutes of Health, USA) and binarized by the *Otsu* method. In the obtained binarized image, the average luminance in the direction horizontal to the membrane surface is calculated for each predetermined distance (for example, 1 pixel) from the membrane surface toward the depth direction. The average brightness is compared from the surface of the separation functional layer toward the support membrane side, and the horizontal direction where the average brightness is highest is determined as the contact interface (contour) between the porous support of the forward osmosis membrane and the separation functional layer.

Regarding the contour of the surface of the separation functional layer, the contour of the surface of the separation functional layer was defined as a curve connecting the parts with a contrast difference from the background with a continuous line in the obtained binarized image. The contours of the separation functional layer in the thickness direction were taken from both ends of the acquired image. These lines were connected to extract the outline of the separation functional layer. The area of the separation functional layer was then calculated by filling the inside of the extracted contour, and converted to the average thickness of the separation functional layer in one image using a calibration curve prepared in advance.

The average value of the obtained nine measured values was then taken as the average thickness of the separation functional layer.

[Evaluation of Presence or Absence of Concave/Convex Structure]

The presence or absence of concave/convex structure was evaluated by carrying out atomic force microscope (AFM) analysis on 10 samples obtained from the forward osmosis membrane and calculating the arithmetic mean height (Sa) as defined in ISO 25178.

10 forward osmosis membranes were cut from near the center in the radial direction of the forward osmosis membrane module, under the condition that the forward osmosis membrane is wet with pure water, the separation functional layer surface is exposed, and the outermost surface of the separation functional layer was scanned under the following conditions to obtain the arithmetic mean height (Sa).

Measurement mode: QNM in fluid (measurement in pure water)
Field of view size: 3 $\mu$m square
Probe used: OLTESPA

When the arithmetic mean height (Sa) calculated as the average value of 10 samples is 40 nm or more, the separation functional layer has a concave/convex structure, and when the arithmetic mean height (Sa) is less than 40 nm, the separation functional layer does not have a concave-convex structure.

[Evaluation of Forward Osmosis after Application of Transmembrane Pressure]

The water permeability F and salt back diffusion amount R of the forward osmosis membrane were evaluated by using purified water as the feed solution, using a 3.5 mass% sodium chloride aqueous solution as the draw solution, arranging the feed solution on the separation functional layer side of the forward osmosis membrane, and arranging the draw solution on the support membrane side. The evaluation conditions were as follows.

Feed solution temperature: 25 °C
Draw solution temperature: 25 °C

<Examples 1 to 3, Comparative Examples 1 to 4>

Membrane surface linear velocity of feed solution: 3 cm/sec
Membrane surface linear velocity of draw solution: 3 cm/sec

<Examples 4 to 8, Comparative Examples 5 to 7>

Feed solution flow rate: 130 mL/min
Draw solution flow rate: 235 mL/min

First, forward osmosis treatment was carried out for 1 hour under the condition of a transmembrane pressure of 20 kPa with the support membrane side and the draw solution side being positive, and water permeability F and salt reverse diffusion R were determined to calculate F/R. This value was taken as the reference value (initial value) of R/F, "$F_0/R_0$." The evaluation was carried out while maintaining the concentration of the draw solution constant by adding a saturated sodium chloride aqueous solution to the draw solution periodically.

After the forward osmosis membrane was washed with water after the above measurement was completed, forward osmosis treatment was carried out under the same conditions as above except that the transmembrane pressure was changed to a predetermined pressure P. Next, the forward osmosis membrane was washed with water again, and the forward osmosis treatment was carried out again under the same conditions as above, except that the transmembrane pressure was returned to 20 kPa, and water permeability F and salt reverse diffusion R were determined, and F/R was calculated. This value was taken as the ratio ($F_p/R_p$) of the water permeability F after applying a given transmembrane pressure P and the salt back diffusion amount R. For example, when the predetermined transmembrane pressure is 50 kPa, the ratio between the water permeability F and the salt back diffusion amount R after applying the transmembrane pressure is expressed as "$F_{50}/R_{50}$."

In this manner, forward osmosis treatment was carried out by sequentially increasing the transmembrane pressure by 50 kPa or 100 kPa to 200 kPa while interposing forward osmosis treatment with a transmembrane pressure of 20 kPa.

For Examples 1 to 3 and Comparative Examples 1 to 4, the values of the ratio ($F_{150}/R_{150}$) of the water permeability $F_{150}$ after the forward osmosis treatment carried out at a transmembrane pressure of 150 kPa and the salt back diffusion amount $R_{150}$ after the forward osmosis treatment carried out at a transmembrane pressure of 20 kPa, as well as the ratio ($F_{200}/R_{200}$) of the water permeability $F_{200}$ after forward osmosis treatment carried out at transmembrane pressure 200 kPa and the salt back diffusion amount $R_{200}$ after forward osmosis treatment carried out at transmembrane pressure 20 kPa were calculated.

For Examples 4 to 8 and Comparative Examples 5 to 7, the values of the ratio ($R_{100}/F_{100}$) of the water permeability $F_{100}$ and the salt back diffusion amount $R_{100}$ after applying 100 kPa, and the ratio ($R_{200}/F_{200}$) of the water permeability $F_{200}$ and salt back diffusion amount $R_{200}$ after applying 200 kPa were calculated.

[Evaluation of Forward Osmosis in Presence of Organic Solvent (Examples 1 to 3, Comparative Examples 1 to 4)]

The forward osmosis membrane performance in the presence of an organic solvent was evaluated by the value of the ratio R/F obtained from water permeability F and salt reverse diffusion R when forward osmosis treatment was carried out under the following conditions.

Feed solution: aqueous solution containing 15% by volume of acetonitrile and 0.6% by mass of acetic acid

Feed solution temperature: 25 °C
Draw solution: an aqueous solution containing 50% by mass of 2-propanol (IPA)
Draw solution temperature: 25 °C
Processing pressure: normal pressure
Processing time: 8 hours

The ratio R/H is a value representing the amount of the draw solution IPA that has leaked into the feed solution through the forward osmosis membrane, as the amount per unit amount of movement of the solvent in the feed solution. It is considered that the smaller the value of the ratio R/F, the higher the performance as a forward osmosis membrane.

It was confirmed that the forward osmosis membranes obtained in the following Examples and Comparative Examples were swollen by the organic solvent because the membranes were deformed during the forward osmosis treatment.

In this forward osmosis evaluation, after carrying out forward osmosis treatment under the above conditions, the forward osmosis membrane was washed with water for 30 minutes, and then the same forward osmosis treatment was carried out again. For the evaluation, the R/F value in the fifth forward osmosis treatment was used.

[Evaluation of forward osmosis after application of transmembrane differential pressure] and [Evaluation of forward osmosis membrane in the presence of organic solvent] were each measured using separate forward osmosis membrane modules prepared by the same manufacturing method.

[Organic Solvent Resistance (Examples 4 to 8, Comparative Examples 5 to 7)]

A forward osmosis membrane module was filled with 99.5% pure ethanol (manufactured by Fujifilm Wako Pure Chemical Industries, Ltd.), and the forward osmosis membrane in the module was immersed in ethanol at 25° C for 48 hours. Then, after washing the forward osmosis membrane with water for 30 minutes, forward osmosis treatment was carried out under the following conditions.

Feed solution: Purified water, 25 °C, arranged on the separation functional layer side
Draw solution: 3.5% by mass sodium chloride aqueous solution, 25 °C, arranged on the support membrane side
Transmembrane pressure: 20 kPa, support membrane side and draw solution side are positive
Processing time: 1 hour

After the above operation, the water permeability F and salt reverse diffusion R were obtained, and RSF/Flux after immersion in the organic solvent was calculated. The performance maintenance rate (%) after organic solvent immersion was calculated by dividing the RSF/Flux value before organic solvent immersion by the RSF/Flux after organic solvent immersion and expressing it as a percentage.

[Organic Solvent Swelling Degree (Examples 4 to 8, Comparative Examples 5 to 7)]

The hollow fiber-like support membrane was cut out so that the longitudinal direction was about 100 mm, and the length was measured. This forward osmosis membrane was immersed in 99.5% pure ethanol (manufactured by Fujifilm Wako Pure Chemical Industries, Ltd.) at 25 °C for 48 hours. The length of the membrane after immersion in ethanol was measured, and the degree of swelling was calculated by the following formula:

Degree of swelling (%) = {(membrane lenght after immersion/membrane lenght before immersion) - 1} x 100

When the forward osmosis membrane was deformed such as waving after immersion in ethanol, the length was measured while holding it by hand as long as the membrane did not deform excessively.

The degree of swelling was measured at 5 points and evaluated as the average value.

The forward osmosis membranes of the following Examples and Comparative Examples did not completely dissolve even after being immersed in ethanol at 25 °C for 48 hours.

[Example 1]

[Preparation of Hollow Fiber Support Membrane]

As the spinning stock solution, a homogeneous polymer solution composed of 19% by mass of polysulfone (manufactured by Solvay Specialty Polymers, Udel-P3500, listed as "PSf" in the table), 61% by mass of N-methyl-2-pyrrolidone (manufactured by Fujifilm Wako Pure Chemical Industries, Ltd.), and 20% by mass of tetraethylene glycol (manufactured by Tokyo Kasei Co., Ltd.) was prepared. A wet hollow fiber spinning machine equipped with a double spinneret was charged with the spinning stock solution at 40 °C. The spinning stock solution was discharged from the outer spinneret, and water adjusted to 25 °C as an internal coagulation liquid was discharged from the inner spinneret followed by running 250 mm in air with a relative humidity of 90% and temperature controlled at 30 °C and then coagulation in a coagulation bath (external coagulation liquid) filled with water at 30 °C to obtain a hollow fiber support membrane.

The resulting hollow fibers had an outer diameter of 1.02 mm, an inner diameter of 0.62 mm, and a membrane thickness of 200 μm.

[Preparation of Support Membrane Module]

A support membrane module having the structure shown in FIG. 1 and having an effective inner membrane surface area of 0.02 m$^2$ was prepared by packing 130 hollow fiber support membranes cut to a length of 120 mm into a cylindrical plastic housing having a diameter of 20 mm and a length of 80 mm, fixing both ends with an adhesive, cutting to open, and attaching a header thereto.

[Formation of Separation Functional Layer]

An aqueous solution (first solution) containing 2.2% by mass of m-phenylenediamine and 0.16% by mass of sodium lauryl sulfate was passed through the inside of the hollow fiber support membrane in the support membrane module for 20 minutes. After the passage of the liquid was completed, the first solution was removed from the pipe at the bottom of the module by gravity, and the outside of the support membrane module was depressurized to 90 kPaG while the inside of the hollow fiber was wetted with the first solution, and this state was held for 1 minute. Thereafter, air was blown inside the hollow fibers at a linear velocity of 210 cm/sec for 1 minute to remove excess first solution. Subsequently, an n-hexane solution (second solution) containing 0.21% by mass of trimesic acid chloride was passed through the inside of the hollow fiber for 2 minutes to carry out interfacial polymerization, whereby a separation functional layer was formed on the inner surface of the hollow fibers. Thereafter, the excess second solution was removed by flowing nitrogen gas, and hot water at 85 °C was then flowed inside the hollow fibers at a linear velocity of 5 cm$^2$/sec for 30 minutes.

Thereafter, the module was placed in an autoclave (AC; manufactured by Tomy Seiko Co., Ltd., SX-500, described as "AC" in the table) with both ends of the hollow fiber support membrane open, and curing was carried out by circulating high-temperature steam at 121 °C for 20 minutes in the autoclave chamber. The inside of the hollow fiber support membrane was washed with water at 20 °C for 30 minutes to obtain a forward osmosis membrane module.

[Evaluation]

Evaluation was carried out using the obtained forward osmosis membrane module. In the forward osmosis membrane obtained in Example 1, the separation functional layer had an arithmetic mean height (Sa) of 131 nm.

[Example 2]

A forward osmosis membrane module was prepared and evaluated in the same manner as in Example 1, except that after carrying interfacial polymerization on the hollow fiber support membrane and removing excess second solution with nitrogen gas, hot water at 85 °C was passed through the inside of the hollow fiber support membrane at a linear velocity of 5 cm/sec for 30 minutes, and then washed with water at 20 °C for 30 minutes.

[Example 3]

A hollow fiber membrane having an outer diameter of 1.00 mm, an inner diameter of 0.70 mm, and a membrane thickness of 150 μm was obtained in the same manner as Example 1, except that in the preparation of the hollow fiber support membrane, a uniform polymer solution composed of 19% by mass of polyethersulfone (manufactured by BASF, Ultrason E2020P, described as "PES" in the table), 61% by mass of N-methyl-2-pyrrolidone (manufactured by Fujifilm Wako Pure Chemical Industries, Ltd.), and 20% by mass of tetraethylene glycol (manufactured by Tokyo Kasei Co., Ltd.) was used in the spinning stock solution, and a solution consisting of 95% by mass of water and 5% by mass of tetraethylene glycol was used as the internal coagulation liquid. A forward osmosis membrane module was prepared and evaluated in the same manner as in Example 1, except that this was used as a hollow fiber support membrane and the effective membrane area of the support membrane module was set to 0.02 m$^2$.

[Comparative Example 1]

As the spinning stock solution, a homogeneous polymer solution composed of 18% by mass of polyethersulfone with hydroxylated ends (manufactured by BASF, Ultrason E2020PSR, listed as "PES-OH" in the table) and 80% by mass of N,N-Dimethylacetamide (manufactured by Fujifilm Wako Pure Chemical Industries, Ltd.) was prepared. A wet hollow fiber spinning machine equipped with a double spinneret was charged with the stock solution. The stock solution at 40 °C and an internal coagulation solution at 45 °C were discharged from the outer spinneret of the double spinneret followed by running 200 mm in air with a relative humidity of 90% and temperature controlled at 30 °C and then coagulation in a coagulation bath (external coagulation liquid) filled with water at 50 °C to obtain a hollow fiber support membrane. At this time, a solution composed of 50% by mass of water and 50% by mass of tetraethylene glycol was used as the internal coagulating liquid.

The obtained hollow fiber support membrane had an outer diameter of 1.0 mm, an inner diameter of 0.70 mm, and a thickness of 150 $\mu$m.

A forward osmosis membrane module was prepared and evaluated in the same manner as in Example 1, except that this hollow fiber support membrane was used.

[Comparative Example 2]

A forward osmosis membrane module was prepared and evaluated in the same manner as in Example 1, except that after carrying out interfacial polymerization on the hollow fiber support membrane and removing excess second solution with nitrogen gas, the module was placed in a dryer at 100 °C for 5 minutes to dry, and was then washed with water at 20 °C for 30 minutes.

[Comparative Example 3]

A forward osmosis membrane module was produced and evaluated in the same manner as in Example 1, except that the diameter of the double spinneret was reduced to obtain a support membrane having an outer diameter of 0.26 mm, an inner diameter of 0.22 mm, and a thickness of 20 $\mu$m, and this was used as the hollow fiber support membrane and the membrane area was adjusted to 0.02 m$^2$.

[Comparative Example 4]

A forward osmosis membrane module was produced and evaluated in the same manner as in Example 1, except that in the formation of the separation functional layer, an aqueous solution containing 1.0% by mass of m-phenylenediamine was used as the first solution, and an n-hexane solution containing 0.12% by mass of trimesic acid chloride was used as the second solution.

In the forward osmosis membrane obtained in Comparative Example 4, the separation functional layer had an arithmetic mean height (Sa) of 22 nm and was evaluated as not having a concave/convex structure.

The above results are shown in Tables 1 and 2 and FIG. 2.

[Table 1]

Table 1

| | | Forward osmosis membrane | | | | | | | | Forward osmosis performance eval | | |
|---|---|---|---|---|---|---|---|---|---|---|---|---|
| | | Porous support (Support membrane) | | | Separation functional layer | | | | | Transmembrane pressure after application | | In presence of organic solvent |
| | | Shape | Material | Thickness [μm] | Material | Curing | | Avg thickness [μm] | Presence/absence of concave/convex structure | | | |
| | | | | | | Method | Temp [°C] | | | F/R [kg/g] | | R/F [g/kg] |
| Ex 1 | | Hollow fiber | PSf | 200 | Polyamide | AC | 121 | 0.64 | Present | $F_0/R_0$ | 41.7 | 4 |
| | | | | | | | | | | $F_{50}/R_{50}$ | 41.7 | |
| | | | | | | | | | | $F_{100}/R_{100}$ | 24.4 | |
| | | | | | | | | | | $F_{150}/R_{150}$ | 21.7 | |
| | | | | | | | | | | $F_{200}/R_{200}$ | 17.5 | |
| Ex 2 | | Hollow fiber | PSf | 200 | Polyamide | Hot water | 85 | 0.69 | Present | $F_0/R_0$ | 18.2 | 15 |
| | | | | | | | | | | $F_{50}/R_{50}$ | 16.7 | |
| | | | | | | | | | | $F_{100}/R_{100}$ | 14.5 | |
| | | | | | | | | | | $F_{150}/R_{150}$ | 12.3 | |
| | | | | | | | | | | $F_{200}/R_{200}$ | 10.5 | |
| Ex 3 | | Hollow fiber | PES | 150 | Polyamide | AC | 121 | 0.72 | Present | $F_0/R_0$ | 35.7 | 6 |
| | | | | | | | | | | $F_{50}/R_{50}$ | 33.3 | |
| | | | | | | | | | | $F_{100}/R_{100}$ | 22.2 | |
| | | | | | | | | | | $F_{150}/R_{150}$ | 18.9 | |
| | | | | | | | | | | $F_{200}/R_{200}$ | 14.9 | |

[Table 2]

Table 2

| | Forward osmosis membrane | | | | | | | | Forward osmosis performance eval | | |
| | Porous support (Support membrane) | | | Separation functional layer | | | | | Transmembrane pressure after application | | In presence of organic solvent |
| | Shape | Material | Thickness [μm] | Material | Curing | | Avg thickness [μm] | Presence/ absence of concave/ convex structure | F/R [kg/g] | | R/F [g/kg] |
| | | | | | Method | Temp [°C] | | | | | |
| Comp Ex 1 | Hollow fiber | PES-OH | 150 | Polyamide | AC | 121 | 0.83 | Present | $F_0/R_0$ | 43.5 | 43 |
| | | | | | | | | | $F_{50}/R_{50}$ | 16.1 | |
| | | | | | | | | | $F_{100}/R_{100}$ | 5.8 | |
| | | | | | | | | | $F_{150}/R_{150}$ | 4.9 | |
| | | | | | | | | | $F_{200}/R_{200}$ | 3.1 | |
| Comp Ex 2 | Hollow fiber | PSf | 200 | Polyamide | Drying | 100 | 0.81 | Present | $F_0/R_0$ | 10.1 | 34 |
| | | | | | | | | | $F_{50}/R_{50}$ | 10.0 | |
| | | | | | | | | | $F_{100}/R_{100}$ | 9.9 | |
| | | | | | | | | | $F_{150}/R_{150}$ | 7.8 | |
| | | | | | | | | | $F_{200}/R_{200}$ | 7.3 | |
| Comp Ex 3 | Hollow fiber | PSf | 30 | Polyamide | AC | 121 | 0.88 | Present | $F_0/R_0$ | 12.5 | 41 |
| | | | | | | | | | $F_{50}/R_{50}$ | 7.7 | |
| | | | | | | | | | $F_{100}/R_{100}$ | 7.0 | |
| | | | | | | | | | $F_{150}/R_{150}$ | 5.6 | |
| | | | | | | | | | $F_{200}/R_{200}$ | 4.9 | |

(continued)

| | Forward osmosis membrane | | | | | | | | Forward osmosis performance eval | |
| | Porous support (Support membrane) | | | Separation functional layer | | | | | Transmembrane pressure after application | In presence of organic solvent |
| | Shape | Material | Thickness [μm] | Material | Curing | | Avg thickness [μm] | Presence/ absence of concave/ convex structure | F/R [kg/g] | R/F [g/kg] |
| | | | | | Method | Temp [°C] | | | | |
| Comp Ex 4 | Hollow fiber | PSf | 200 | Polyamide | AC | 121 | <0.10 | Absent | $F_0/R_0$ 9.3 | 51 |
| | | | | | | | | | $F_{50}/R_{50}$ 6.0 | |
| | | | | | | | | | $F_{100}/R_{100}$ 5.0 | |
| | | | | | | | | | $F_{150}/R_{150}$ 4.7 | |
| | | | | | | | | | $F_{200}/R_{200}$ 4.3 | |

The forward osmosis membranes of Examples 1 to 3 in which the ratio ($F_{100}/R_{100}$) of the water permeability $F_{100}$ (kg/(m$^2$×hr)) to the salt back diffusion amount $R_{100}$ (g/(m$^2$×hr)) was 11.0 kg/g or more after carrying out forward osmosis while applying a transmembrane pressure of 100 kPa with the support membrane side as positive, and then carrying out forward osmosis while applying a transmembrane pressure of 20 kPa with the support membrane side as positive, had small R/F values in forward osmosis evaluation in the presence of an organic solvent. Specifically, the forward osmosis membranes of Examples 1 to 3 exhibited a small amount of IPA used as a draw solute in the draw solution leaking into the feed solution, and exhibited high forward osmosis membrane performance.

Conversely, the forward osmosis membranes of Comparative Examples 1 to 4, in which the ratio ($F_{100}/R_{100}$) was less than 11.0 kg/g, had a large R/F value and a large amount of IPA leakage in the forward osmosis evaluation in the presence of an organic solvent. This is likely because the forward osmosis membranes of Comparative Examples 1 to 4 were insufficient in the physical durability of the membrane, the blocking ability of the separation functional layer, or both. In the forward osmosis membrane of Comparative Example 4, the R/F value was remarkably increased in forward osmosis evaluation in the presence of an organic solvent. This is because the separation functional layer of the forward osmosis membrane of Comparative Example 4 did not have a concave/convex structure, so the separation functional layer could not follow the deformation of the support membrane by the organic solvent, and at least a part of the separation functional layer was damaged.

As described above, in forward osmosis treatment in the presence of an organic solvent, in order to obtain a forward osmosis membrane that can achieve both high water permeability property and low salt reverse diffusion, it was verified that it is important to design so that the ratio ($F_{100}/R_{100}$) of the water permeability $F_{100}$ (kg/(m$^2$×hr)) and the salt back diffusion amount $R_{100}$ (g/(m$^2$×hr)) is large after carrying out forward osmosis while applying a transmembrane pressure of 100 kPa or more with the support membrane side as positive, and then forward osmosis while applying a transmembrane pressure of 20 kPa with the support membrane side as positive,

[Example 4]

[Preparation of Hollow Fiber Support Membrane]

As the spinning stock solution, a homogeneous polymer solution composed of 19% by mass of polysulfone (manufactured by Solvay Specialty Polymers, Udel-P3500) (denoted as "PSf" in the table), 61% by mass of N-methyl-2-pyrrolidone (manufactured by Fujifilm Wako Pure Chemical Industries, Ltd.), and 20% by mass of tetraethylene glycol (manufactured by Tokyo Kasei Co., Ltd.) was prepared. A wet hollow fiber spinning machine equipped with a double spinneret was charged with the spinning stock solution at 40 °C. After discharging the spinning stock solution from the outer spinneret and the water adjusted to 25 °C as the internal coagulation liquid from the inner spinneret followed by running 250 mm in air with a relative humidity of 98% and temperature controlled at 30 °C and then coagulation in a coagulation bath (external coagulation liquid) filled with water at 35 °C to obtain a hollow fiber support membrane.

The resulting hollow fiber had an outer diameter of 1.02 mm, an inner diameter of 0.62 mm, and a thickness of 0.2 mm.

[Preparation of Support Membrane Module]

A support membrane module having the structure shown in FIG. 1 and having an effective inner membrane surface area of 0.02 m$^2$ was prepared by packing 130 hollow fiber support membranes cut to a length of 120 mm into a cylindrical plastic housing having a diameter of 20 mm and a length of 80 mm, affixing both ends with adhesive, cutting to open the end face, and attaching a header thereto.

[Formation of Separation Functional Layer]

An aqueous solution (first solution) containing 2.1% by mass of m-phenylenediamine and 0.14% by mass of sodium lauryl sulfate was passed through the inside of the hollow fiber support membrane in the support membrane module for 20 minutes. After the passage of the liquid was completed, the first solution was removed from the pipe at the bottom of the module by gravity, and then the outside of the support membrane module was depressurized to 90 kPaG while the inside of the hollow fiber was wet with the first solution, and this state was maintained for 1 minute. Thereafter, air was blown inside the hollow fibers at a linear velocity of 210 cm/sec for 1 minute to remove excess first solution. Next, an n-hexane solution (second solution) containing 0.20% by mass of trimesoic acid chloride was passed through the inside of the hollow fibers for 2 minutes to cause interfacial polymerization, whereby a separation functional layer was formed on the inner surface of the hollow fibers. Thereafter, nitrogen gas was flowed to remove excess second solution, and then hot water at 85 °C was flowed inside the hollow fibers at a linear velocity of 5 cm/sec for 30 minutes.

Thereafter, the module was placed in an autoclave (manufactured by Tomy Seiko Co., Ltd., SX-500) (denoted as "AC" in the table) with both ends of the hollow fiber support membrane open, and $curing was carried out by circulating high-temperature steam at 121°C for 20 minutes in the autoclave chamber. The inside of the hollow fiber support membrane was washed with water at 20°C for 30 minutes to obtain a forward osmosis membrane module.

[Evaluation]

Various evaluations were carried out using the obtained forward osmosis membrane module.

[Example 5]

A forward osmosis membrane module was prepared and evaluated in the same manner as in Example 4, except that after carrying out interfacial polymerization on the hollow fiber support membrane and removing excess second solution with nitrogen gas, hot water at 85 °C was passed through the inside of the hollow fiber at a linear velocity of 5 cm/sec for 30 minutes, and then washed with water at 20°C for 30 minutes.

[Example 6]

A forward osmosis membrane module was prepared and evaluated in the same manner as in Example 4, except that interfacial polymerization was carried out on the hollow fiber support membrane, and after removing the excess second solution with nitrogen gas, the module was placed in a dryer at 50 °C for 5 minutes.

[Example 7]

A hollow fiber support membrane was obtained in the same manner as in Example 1, except that in the preparation of the hollow fiber support membrane, a homogenous polymer solution composed of 19% by mass of polyethersulfone (manufactured by BASF, Ultrason E2020P) (denoted as "PES" in the table), 61% by mass of N-methyl-2-pyrrolidone (manufactured by Fujifilm Wako Pure Chemical Industries, Ltd.), and 20% by mass of tetraethylene glycol (manufactured by Tokyo Kasei Co., Ltd.) was used, and a solution composed of 95% by mass of water and 5% by mass of tetraethylene glycol was used as the internal coagulation liquid. The obtained hollow fiber support membrane had an outer diameter of 1.02 mm, an inner diameter of 0.62 mm, and a thickness of 0.20 mm.

A forward osmosis membrane module was prepared in the same manner as in Example 4, except that the above hollow fiber support membrane was used.

Various evaluations were carried out using the obtained forward osmosis membrane module.

[Example 8]

A forward osmosis membrane module was prepared and evaluated in the same manner as in Example 7, except that the separation functional layer was formed outside the hollow fiber support membrane.

[Comparative Example 5]

As the spinning stock solution, a homogeneous polymer solution composed of 18% by mass of polyethersulfone with hydroxylated ends (manufactured by BASF, Ultrason E2020PSR) (denoted as "PES-OH" in the table) and 80% by mass of N,N-dimethylacetamide (manufactured by Fujifilm Wako Pure Chemical Industries, Ltd.) was prepared. A wet hollow fiber spinning machine equipped with a double spinneret was charged with the stock solution. A 40 °C undiluted solution and a 45 °C internal coagulation solution were discharged from the outer spinneret of the double spinneret followed by running 200 mm in air with a relative humidity of 98% and temperature controlled at 30 °C and then coagulation in a coagulation bath (external coagulation liquid) filled with water at 50 °C to obtain a hollow fiber support membrane. At this time, a solution composed of 50% by mass of water and 50% by mass of tetraethylene glycol was used as the internal coagulation liquid.

The obtained hollow fiber had an outer diameter of 1.02 mm, an inner diameter of 0.62 mm, and a thickness of 0.20 mm.

A forward osmosis membrane module was prepared and evaluated in the same manner as in Example 4, except that the hollow fiber support membrane was used.

[Comparative Example 6]

A forward osmosis membrane module was prepared and evaluated in the same manner as in Comparative Example 5, except that after carrying out interfacial polymerization on the hollow fiber support membrane and removing excess second solution with nitrogen gas, the module was placed in a dryer at 50 °C for 5 minutes and then washed with water at 20 °C for 30 minutes

[Comparative Example 3]

[Preparation of Flat Membrane Forward Osmosis Membrane]

The polysulfone porous support side surface of a 200 $\mu$m thick flat membrane-like support membrane consisting of a laminate of a polyester nonwoven fabric base material (ventilation rate: 4 cc/(cm$^2$×sec)) and a polysulfone porous support was brought into contact with an aqueous solution (first solution) containing 2.1% by mass m-phenylenediamine and 0.14% by mass sodium lauryl sulfate for 20 minutes. Thereafter, air was flowed over the surface of the first solution-applied surface to remove excess solution. Next, an n-hexane solution (second solution) containing 0.20% by mass of trimesic acid chloride was brought into contact with the surface coated with the first solution for 2 minutes to carry out interfacial polymerization, and a separation functional layer was formed on the porous support.

Thereafter, nitrogen gas was flowed to the separation functional layer forming surface to remove excess second solution, and then the support membrane on which the separation functional layer was formed was immersed in hot water at 85 °C for 30 minutes.

Next, the support membrane with the separation functional layer formed thereon was placed in an autoclave, and after passing high-temperature steam at 121 °C for 20 minutes, it is washed with water at 20 °C for 30 minutes to obtain a flat forward osmosis membrane.

[Preparation and Evaluation of Flat Membrane Cell]

The flat membrane-like forward osmosis membrane obtained above was cut into a 140 mm × 140 mm rectangle. A module (flat membrane cell) containing the flat forward osmosis membrane having an effective membrane area of 0.02 m$^2$ was prepared by placing the flat forward osmosis membrane in a rectangular parallelepiped housing having a length of 200 mm, a width of 200 mm, and a thickness of 300 mm.

Various evaluations were carried out using the obtained flat membrane cell.

Evaluation was carried out according to the evaluation method in Example 4, except that appropriate changes were made to suit the evaluation of the flat forward osmosis membrane.

The flow rates of the feed solution and the draw solution were set so that the linear velocity was the same as in Example 4, and other conditions were the same for evaluation.

The forward osmosis membrane of Comparative Example 3 showed a small change in length in the evaluation of the degree of swelling with an organic solvent, but the flat membrane sheet when arranged on a flat surface became significantly rounder than before immersion.

The above results are shown in Tables 3 and 4.

[Table 3]

Table 3

| | Forward osmosis membrane structure | | | | | | | | |
|---|---|---|---|---|---|---|---|---|---|
| | Support membrane | | | | | Separation functional layer | | | |
| | Base material | Porous support | | | | Position | Curing | | |
| | | Shape | Material | Membrane thickness [mm] | EtOH degree of swelling [%] | | Method | Temp [°C] |
| Ex 4 | Absent | Hollow fiber | PSf | 0.20 | 2.5 | Inside | AC | 121 |
| Ex 5 | Absent | Hollow fiber | PSf | 0.20 | 2.5 | Inside | Hot water | 85 |
| Ex 6 | Absent | Hollow fiber | PSf | 0.20 | 2.5 | Inside | Drying | 50 |
| Ex 7 | Absent | Hollow fiber | PES | 0.20 | 3.1 | Inside | AC | 121 |
| Ex 8 | Absent | Hollow fiber | PES | 0.20 | 3.1 | Outside | AC | 121 |
| Comp Ex 5 | Absent | Hollow fiber | PES-OH | 0.20 | 3.1 | Inside | AC | 121 |
| Comp Ex 6 | Absent | Hollow fiber | PES-OH | 0.20 | 3.4 | Inside | Drying | 50 |
| Comp Ex 7 | Present | Flat membrane | PSf | 0.20 | 0.8[*) | Both[**) | AC | 121 |
| *) Deformed; **) On surface of porous support membrane | | | | | | | | |

[Table 4]

Table 4

| | Forward osmosis evaluation | | | | | | | |
|---|---|---|---|---|---|---|---|---|
| | Initial value (baseline value) | | After application of transmembrane pressure | | After ethanol immersion | | | |
| | F [kg/(m2·hr)] | R [g/(m2·hr)] | R/F [g/kg] | | F [kg/(m2·hr)] | R [g/(m2·hr)] | R/F [g/kg] | Performance maintenance rate [%] |
| Ex 4 | 7.3 | 0.18 | $R_0/F_0$ | 0.025 | 10.5 | 0.27 | 0.026 | 96 |
| | | | R100/F100 | 0.045 | | | | |
| | | | R200/F200 | 0.056 | | | | |
| Ex 5 | 8.7 | 0.49 | $R_0/F_0$ | 0.056 | 15.8 | 1.70 | 0.108 | 52 |
| | | | R100/F100 | 0.068 | | | | |
| | | | R200/F200 | 0.093 | | | | |

(continued)

| | Forward osmosis evaluation | | | | | | | |
|---|---|---|---|---|---|---|---|---|
| | Initial value (baseline value) | | After application of transmembrane pressure | | After ethanol immersion | | | |
| | $F$ [kg/ (m2·hr)] | $R$ [g/ (m2·hr)] | $R/F$ [g/kg] | | $F$ [kg/ (m2·hr)] | $R$ [g/ (m2·hr)] | $R/F$ [g/kg] | Performance maintenance rate [%] |
| Ex 6 | 10.1 | 1.03 | $R_0/F_0$ | 0.102 | 15.8 | 3.75 | 0.237 | 43 |
| | | | R100/F100 | 0.105 | | | | |
| | | | R200/F200 | 0.137 | | | | |
| Ex 7 | 7.4 | 0.24 | $R_0/F_0$ | 0.032 | 10.9 | 0.39 | 0.036 | 91 |
| | | | R100/F100 | 0.052 | | | | |
| | | | R200/F200 | 0.068 | | | | |
| Ex 8 | 7.2 | 0.40 | $R_0/F_0$ | 0.056 | 11.0 | 1.50 | 0.136 | 41 |
| | | | R100/F100 | 0.071 | | | | |
| | | | R200/F200 | 0.091 | | | | |
| Comp Ex 5 | 9.0 | 0.18 | $R_0/F_0$ | 0.020 | 21.4 | 12.30 | 0.575 | 3 |
| | | | R100/F100 | 0.171 | | | | |
| | | | R200/F200 | 0.321 | | | | |
| Comp Ex 6 | 10.0 | 1.63 | $R_0/F_0$ | 0.163 | 23.6 | 15.60 | 0.661 | 25 |
| | | | R100/F100 | 0.320 | | | | |
| | | | R200/F200 | 0.462 | | | | |
| Comp Ex 7 | 0.8 | 0.16 | $R_0/F_0$ | 0.200 | 1.7 | 3.80 | 2.235 | 9 |
| | | | R100/F100 | 0.287 | | | | |
| | | | R200/F200 | 0.402 | | | | |

In Examples 4 to 8, the R/F value of the forward osmosis membrane after ethanol immersion was maintained low. From this, it was verified that these forward osmosis membranes have a certain level of durability even when they come into contact with organic solvents that swell the forward osmosis membranes, exhibiting high water permeability property and certain salt-blocking properties.

In Examples 4 to 8, the performance maintenance rate defined as the ratio of the R/F after ethanol immersion and the reference value R/F exceeded 40%, and the water permeability property after ethanol immersion (F) increased from the standard. From this, it was confirmed that by immersing these forward osmosis membranes in ethanol, the performance of the forward osmosis membranes could be changed while maintaining constant separation performance.

Conversely, the forward osmosis membranes of Comparative Examples 5 and 6 had a low initial R/F and showed a practical value, but the R/F after immersion in ethanol increased, and sufficient durability against organic solvents was not observed. This is probably due to the fact that the surface structure of the support membrane is sparse and non-uniform compared to the forward osmosis membrane of the Examples. When the surface structure of the support membrane is sparse and non-uniform, the pores will also swell and become larger when the support membrane swells, weakening the force that holds the separation functional layer.

In Comparative Example 7, the change in R/F after the application of the transmembrane differential pressure was small, suggesting that the surface structure of the support membrane was moderately dense. However, the forward osmosis membrane of Comparative Example 7 had a very large R/F after immersion in ethanol, and had insufficient organic solvent durability. It is presumed that this is probably due to the fact that the non-woven base material and the porous support, which constitute the support membrane, swelled with different degrees of swelling. Since the nonwoven base material and the porous support swelled with different degrees of swelling, a part of the membrane was damaged, and the separation functional layer was also damaged as a result of the damage reaching the separation functional layer.

REFERENCE SIGNS LIST

| | |
|---|---|
| 1 | hollow fiber membrane module |
| 2, 3 | outer conduit |
| 4 | hollow fiber membrane |
| 5, 6 | adhesive affixation part |
| 7, 8 | header |
| 9, 10 | inner conduit |

**Claims**

1. A forward osmosis membrane, comprising a support membrane and a separation functional layer on the support membrane, wherein

   the support membrane comprises a porous support, and
   when the forward osmosis membrane is interposed between water arranged on the separation functional layer side and a 3.5 mass% sodium chloride aqueous solution arranged on the porous support side, a forward osmosis treatment is carried out at a transmembrane pressure P = 100 (kPa), with the porous support side as the positive side, and a forward osmosis treatment is then carried out at a transmembrane pressure P = 20 kPa, with the porous support side as the positive side, a ratio ($R_{100}/F_{100}$) of a water permeability ($F_{100}$, unit: kg/(m$^2$×hr)) and a salt back diffusion amount ($R_{100}$, unit: g/(m$^2$×hr) satisfies the following formula:

$$0 \text{ g/kg} \leq R_{100}/F_{100} \leq 0.12 \text{ g/kg}.$$

2. The forward osmosis membrane according to claim 1, wherein the ratio ($R_{100}/F_{100}$) satisfies the following formula:

$$0 \text{ g/kg} \leq R_{100}/F_{100} \leq 0.091 \text{ g/kg}.$$

3. The forward osmosis membrane according to claim 1, wherein when the forward osmosis membrane is interposed between water arranged on the separation functional layer side and a 3.5 mass% sodium chloride aqueous solution arranged on the porous support side, a forward osmosis treatment is carried out at a transmembrane pressure P = 150 (kPa), with the porous support side as the positive side, and a forward osmosis treatment is then carried out at a transmembrane pressure P = 20 kPa, with the porous support side as the positive side, a ratio ($R_{150}/F_{150}$) of a water permeability ($F_{150}$, unit: kg/(m$^2$×hr)) and a salt back diffusion amount ($R_{150}$, unit: g/(m$^2$×hr) satisfies the following formula:

$$0 \text{ g/kg} \leq R_{150}/F_{150} \leq 0.15 \text{ g/kg}.$$

4. The forward osmosis membrane according to claim 3, wherein the ratio ($R_{150}/F_{150}$) satisfies the following formula:

$$0 \text{ g/kg} \leq R_{150}/F_{150} \leq 0.10 \text{ g/kg}.$$

5. The forward osmosis membrane according to claim 1, wherein when the forward osmosis membrane is interposed between water arranged on the separation functional layer side and a 3.5 mass% sodium chloride aqueous solution arranged on the porous support side, a forward osmosis treatment is carried out at a transmembrane pressure P = 200 (kPa), with the porous support side as the positive side, and a forward osmosis treatment is then carried out at a transmembrane pressure P = 20 kPa, with the porous support side as the positive side, a ratio ($R_{200}/F_{200}$) of a water permeability ($F_{200}$, unit: kg/(m$^2$×hr)) and a salt back diffusion amount ($R_{200}$, unit: g/(m$^2$×hr) satisfies the following formula:

$$0 \text{ g/kg} \leq R_{200}/F_{200} \leq 0.30 \text{ g/kg.}$$

6. The forward osmosis membrane according to claim 5, wherein the ratio ($R_{200}/F_{200}$) satisfies the following formula:

$$0 \text{ g/kg} \leq R_{200}/F_{200} \leq 0.10 \text{ g/kg.}$$

7. The forward osmosis membrane according to claim 1, wherein a thickness of the porous support is 50 $\mu$m or more and 1000 $\mu$m or less.

8. The forward osmosis membrane according to claim 1, wherein the support membrane does not comprise a base material, and
the forward osmosis membrane is constituted substantially from only the porous support and the separation functional layer.

9. The forward osmosis membrane according to claim 1, wherein the support membrane is hollow fiber-shaped.

10. The forward osmosis membrane according to claim 9, wherein the separation functional layer is present on an inner surface of the hollow fiber-shaped support membrane.

11. The forward osmosis membrane according to claim 1, wherein the porous support swells by 1.0 to 5.0% after being immersed in ethanol at 25 °C for 48 hours.

12. The forward osmosis membrane according to claim 1, wherein the separation functional layer contains a polyamide.

13. The forward osmosis membrane according to claim 1, wherein the separation functional layer has a concave/convex structure having an arithmetic mean height (Sa) of 40 nm or more.

14. The forward osmosis membrane according to claim 1, wherein the porous support comprises one or more selected from the group consisting of polysulfones, polyethersulfones, and derivatives thereof.

15. A forward osmosis membrane module, which is configured by housing the forward osmosis membrane according to claim 1 in a housing.

## FIG. 1

## FIG. 2

## INTERNATIONAL SEARCH REPORT

International application No.

**PCT/JP2022/020834**

### A. CLASSIFICATION OF SUBJECT MATTER

***B01D 61/00***(2006.01)i; ***B01D 63/02***(2006.01)i; ***B01D 69/00***(2006.01)i; ***B01D 69/02***(2006.01)i; ***B01D 69/08***(2006.01)i;
***B01D 69/10***(2006.01)i; ***B01D 69/12***(2006.01)i; ***B01D 71/56***(2006.01)i; ***B01D 71/68***(2006.01)i; ***B32B 5/18***(2006.01)i
FI:  B01D61/00 500; B01D69/12; B01D63/02; B01D69/08; B01D69/10; B01D71/56; B01D71/68; B32B5/18; B01D69/00;
B01D69/02

According to International Patent Classification (IPC) or to both national classification and IPC

### B. FIELDS SEARCHED

Minimum documentation searched (classification system followed by classification symbols)

B01D61/00; B01D63/02; B01D69/00; B01D69/02; B01D69/08; B01D69/10; B01D69/12; B01D71/56; B01D71/68; B32B5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/059769 A1 (ASAHI KASEI KABUSHIKI KAISHA) 26 March 2020 (2020-03-26) table 1, example 2 | 1-15 |
| A | WO 2020/241860 A1 (ASAHI KASEI KABUSHIKI KAISHA) 03 December 2020 (2020-12-03) | 1-15 |

☐ Further documents are listed in the continuation of Box C. ☑ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **01 July 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/020834**

| Patent document cited in search report | | | Publication date (day/month/year) | Patent family member(s) | | | Publication date (day/month/year) |
|---|---|---|---|---|---|---|---|
| WO | 2020/059769 | A1 | 26 March 2020 | US | 2021/0178327 | A1 | |
| | | | | table 1, example 2 | | | |
| | | | | EP | 3854472 | A1 | |
| | | | | CA | 3110147 | A1 | |
| | | | | AU | 2019343597 | A1 | |
| WO | 2020/241860 | A1 | 03 December 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018008270 A
- JP 6191102 B

- WO 2016024573 A